# EUROPEAN PATENT SPECIFICATION

(11) **EP 3 923 065 B1**
(45) Date of publication and mention of the grant of the patent: **14.05.2025**
(21) Application number: 20751927.3
(22) Date of filing: 28.01.2020
(51) Int. Cl.: G03B 15/00, G03B 17/18, G03B 37/00

(54) **PHOTOGRAPHING SYSTEM, PHOTOGRAPHING SPOT SETTING DEVICE, PHOTOGRAPHING DEVICE, AND PHOTOGRAPHING METHOD**
FOTOGRAFIESYSTEM, EINSTELLVORRICHTUNG FÜR FOTOGRAFIEPUNKT, FOTOGRAFIEVORRICHTUNG UND FOTOGRAFIEVERFAHREN
SYSTÈME DE PHOTOGRAPHIE, DISPOSITIF DE RÉGLAGE DE POINT DE PHOTOGRAPHIE, DISPOSITIF DE PHOTOGRAPHIE ET PROCÉDÉ DE PHOTOGRAPHIE

(30) Priority: 07.02.2019 JP 2019020702
(43) Date of publication of application: 15.12.2021
(73) Proprietor: FUJIFILM Corporation, Tokyo 106-8620 (JP)
(72) Inventor: YONAHA, Makoto, Tokyo 107-0052 (JP)
(74) Representative: Meissner Bolte Partnerschaft mbB
(86) International application number: PCT/JP2020/002949
(87) International publication number: WO 2020/162264

(56) References cited:
- JP-A- 2014 072 803
- JP-A- 2016 012 232
- US-A1- 2007 025 723
- US-A1- 2010 268 409
- US-A1- 2014 267 803

## Description

### BACKGROUND OF THE INVENTION

### 1. Field of the Invention

The present invention relates to a photographing system, a photographed-portion setting apparatus, a photographing apparatus, and a photographing method and specifically relates to a photographing system, a photographed-portion setting apparatus, a photographing apparatus, and a photographing method for photographing a specific photographed portion set in a part of a photographed subject.

### 2. Description of the Related Art

As a technique for supporting an inspection of a structure, such as a bridge, a technique in which damage, such as a crack, is automatically detected from an image obtained by photographing the surface of the structure is known. In this case, as an image for inspection, a panoramic composite image is often used.

In a case of generating a panoramic composite image, it is necessary to photograph a subject without omission. However, in a case where the subject extends over a broad area, an omission of photographing may occur or an image of low image quality may be captured. In such cases, the corresponding region is re-photographed.

However, it is difficult to accurately identify the portion to be re-photographed in a broad site. Specifically, in a case where a person giving an instruction for re-photographing is different from a person actually performing photographing on site, it is difficult to properly communicate necessary information to the photographing person side and the re-photographing operation requires considerable effort.

JP2012-160904A proposes a technique for supporting such a re-photographing operation in which support information necessary for photographing a specific portion is generated and communicated to a photographing person. The support information at least includes information about the photographing position and the photographing direction, and the photographing person adjusts the photographing position and the photographing method on the basis of the support information to perform photographing.

US 2014/267803 A1 addresses a technique for solving the problem of a lost target when setting the focal range to be relatively long. In such a situation, since the photographing range is extremely narrow, the main target to be photographed may move out of the range of the viewfinder image and be lost due to camera shake. Therefore document D1 discloses a camera that includes means for displaying a target mark allowing grasping of the position of the main object in the viewfinder image at all times, and for performing an image comparison process of comparing each frame image of live view images sequentially displayed as the viewfinder image and a corresponding ideal image, to determine shifting of the camera (viewfinder image) caused by camera shake or the like occurring during zooming, and display visual information regarding the amount of shift, the shifting direction and the like in the viewfinder image, and to notify the photographer of the occurrence of camera shake or the like. Therefore allowing the user to see the direction of the camera which is shifted with respect to the main object, simply by looking at the viewfinder image.

US 2007/025723 A1 teaches a live input mapping and a real-time stitching to map a live input to a corresponding location on a display device.

US 2010/268409 A1 addresses a method for inspecting structures e.g. bridges, involves using independent unmanned mobile vehicles each equipped with control and guidance system for autonomous vehicle operation.

However, the technique of JP2012-160904A has a disadvantage that photographingneeds to be performed while the photographing position and the photographing direction are accurately measured. To realize this, sophisticated measuring means is required on the photographing apparatus side, which is also a disadvantage.

### SUMMARY OF THE INVENTION

The present invention has been made in view of the above-described circumstances, and an object thereof is to provide a photographing system, a photographed-portion setting apparatus, a photographing apparatus, and a photographing method for facilitating photographing of a specific portion of a photographed subject.

Means for addressing the above-described issue are defined by the independent claims. The dependent claims define advantageous embodiments.

The present invention can facilitate photographing of a specific portion of a photographed subject.

### BRIEF DESCRIPTION OF THE DRAWINGS

Fig. 1 is a diagram illustrating a system configuration of a first embodiment of a photographing system according to the present invention;
Fig. 2 is a block diagram illustrating a schematic configuration of a computer that functions as a photographed-portion setting apparatus;
Fig. 3 is a block diagram of major functions of the photographed-portion setting apparatus;
Fig. 4 is a block diagram illustrating a schematic configuration of a digital camera;
Fig. 5 is a block diagram of a configuration for implementing a guide function;
Fig. 6 is a perspective view of a bridge when viewed from underneath;
Fig. 7 is a diagram illustrating an example of a procedure for photographing a panel in a case of panoramic composition;
Fig. 8 is a diagram illustrating an example of the result of photographing in sections;
Fig. 9 is a diagram illustrating an example of a panoramic composite image generated on the basis of the result of photographing illustrated in Fig. 8;
Fig. 10 is a flowchart illustrating a procedure of a process performed by the photographed-portion setting apparatus;
Fig. 11 is a diagram illustrating example display of an image of a photographed subject on a display;
Fig. 12 is a diagram illustrating an example of a marking image;
Fig. 13 is a conceptual diagram of generation of a reference image;
Fig. 14 is a flowchart illustrating a procedure of a process performed by the digital camera in a case where a photographing guide mode is set;
Fig. 15 is a flowchart illustrating the procedure of the process performed by the digital camera in the case where the photographing guide mode is set;
Fig. 16 is a diagram illustrating example display of a marking image on a display;
Fig. 17 is a diagram illustrating example display of a detection frame in a case where a reference image fits in an angle of view;
Fig. 18 is a diagram illustrating example display of a detection frame in a case where a reference image does not fit in an angle of view;
Fig. 19 is a diagram illustrating an example case where a region that is set as a photographed portion is surrounded with a frame to specify the photographed portion;
Fig. 20 is a diagram illustrating an example case where a region that is set as a photographed portion is surrounded with a frame to specify the photographed portion;
Fig. 21 is a functional block diagram of the photographed-portion setting apparatus in a case where a photographed portion is automatically set;
Fig. 22 is a conceptual diagram illustrating an example of assigning lot numbers to a photographed subject;
Fig. 23 is a conceptual diagram of generation of location information using information of a lot number;
Fig. 24 is a diagram illustrating an example of a guide method using lot-number information;
Fig. 25 is a diagram illustrating an example case where GPS information of a photographed portion and GPS information of a current location are displayed;
Fig. 26 is a diagram illustrating a system configuration of a second embodiment of the photographing system according to the present invention;
Fig. 27 is a block diagram illustrating an electric configuration of a controller;
Fig. 28 is a block diagram of a configuration for implementing a guide function; and
Fig. 29 is a block diagram of a configuration for implementing automatic photographing.

### DESCRIPTION OF THE PREFERRED EMBODIMENTS

Hereinafter, preferred embodiments of the present invention will be described with reference to the attached drawings.

### First Embodiment

### Photographing System

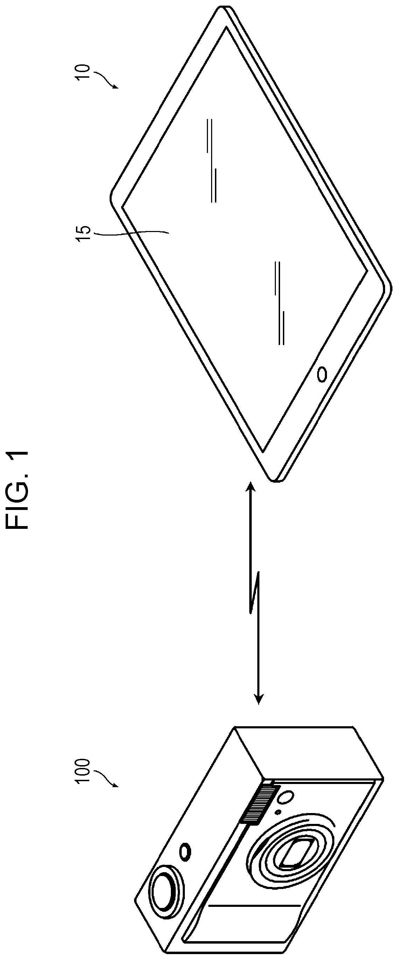

Fig. 1 is a diagram illustrating a system configuration of a first embodiment of a photographing system according to the present invention.

The photographing system of this embodiment is configured as a system for photographing a photographed portion that is set in a part of a photographed subject with pinpoint accuracy. Specifically, the photographing system of this embodiment is configured as a system for manual photographing.

As illustrated in Fig. 1, the photographing system includes a photographed-portion setting apparatus 10 for setting a photographed portion and a digital camera 100 for photographing the set photographed portion. The digital camera 100 is an example of a photographing apparatus.

The photographed-portion setting apparatus 10 and the digital camera 100 are configured so as to enable mutual communication. Communication performed between the photographed-portion setting apparatus 10 and the digital camera 100 is short-range wireless communication (for example, communication conforming to a short-range wireless communication standard, such as the NFC (Near Field Communication) standard, Bluetooth (registered trademark), or WiFi (Wireless Fidelity)). Alternatively, the communication is performed via a communication network. The communication network is formed of, for example, a wireless communication network and base stations conforming to 3G (3rd Generation), WiMAX (Worldwide Interoperability for Microwave Access), or LTE (Long Term Evolution) and the Internet.

### Photographed-Portion Setting Apparatus

The photographed-portion setting apparatus 10 has a function of accepting specification of a photographed portion from a user and setting the photographed portion and a function of generating information necessary for photographing the set photographed portion with the digital camera 100.

The photographed-portion setting apparatus 10 is formed of a computer. That is, the computer executes a specific program (photographed-portion setting program) to thereby function as the photographed-portion setting apparatus.

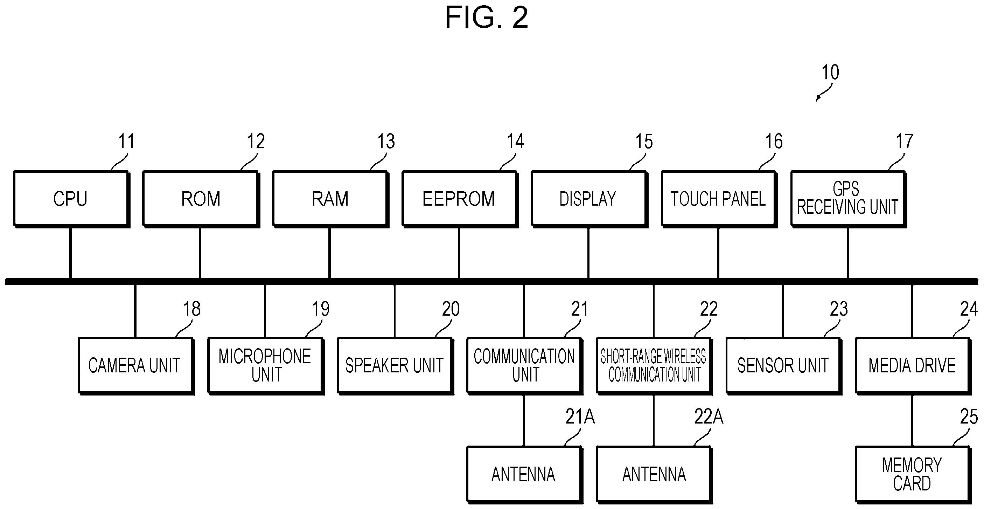

Fig. 2 is a block diagram illustrating a schematic configuration of the computer that functions as the photographed-portion setting apparatus. Fig. 2 illustrates an example case where the photographed-portion setting apparatus 10 is formed of a tablet computer.

As illustrated in Fig. 2, the photographed-portion setting apparatus 10 includes a CPU (central processing unit) 11 that controls overall operations, a ROM (read-only memory) 12 that stores a basic input/output program and so on, a RAM (random access memory) 13 that is used as a work area of the CPU 11, an EEPROM (electrically erasable and programmable ROM) 14 that stores various programs including an operating system executed by the CPU 11 and various types of data, a display 15, a touch panel 16 that detects a touch operation on a display screen, a GPS(Global Positioning Systems) receiving unit 17 that receives a GPS signal including positional information (the latitude, the longitude, and the altitude) of the photographed-portion setting apparatus 10 from a GPS satellite or an IMES (Indoor MEssaging System) that serves as an indoor GPS, a camera unit 18 that includes an imaging lens and an image sensor and electronically captures an image, a microphone unit 19 that includes a microphone and receives sound, a speaker unit 20 that includes a speaker and outputs sound, a communication unit 21 that uses an antenna 21A to wirelessly communicate with a nearby base station, a short-range wireless communication unit 22 that uses an antenna 22A to perform short-range wireless communication with an external device, a sensor unit 23 that includes various sensors including a geomagnetic sensor, a gyrocompass, and an acceleration sensor, and a media drive 24 that reads and writes data from and to a memory card 25.

In the photographed-portion setting apparatus 10 of this embodiment, the display 15 is an example of a first display unit, and the touch panel 16 is an example of a photographed-portion specifying unit.

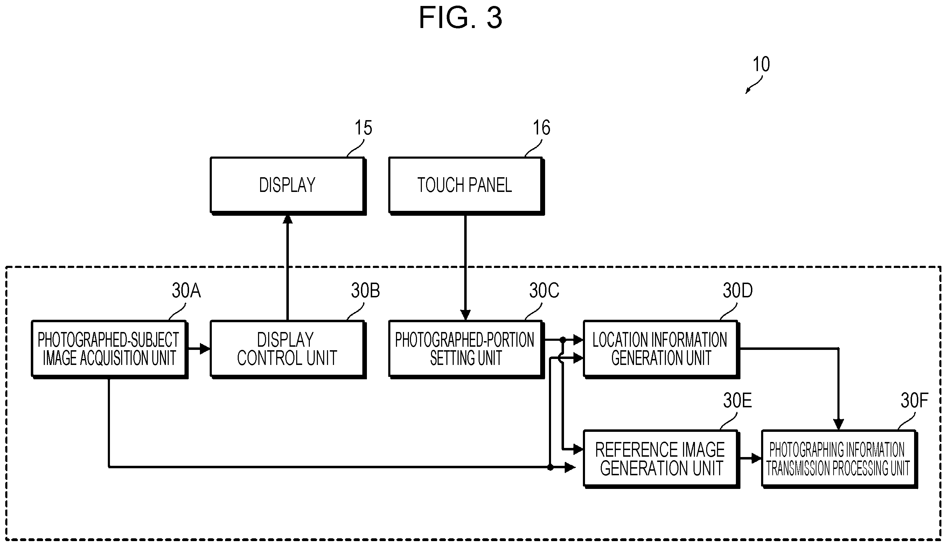

Fig. 3 is a block diagram of major functions of the photographed-portion setting apparatus.

The photographed-portion setting apparatus 10 has functions of a photographed-subject image acquisition unit 30A that acquires an image of a photographed subject, a display control unit 30B that controls display on the display 15, a photographed-portion setting unit 30C that sets a photographed portion, a location information generation unit 30D that generates information indicating the location of the set photographed portion, a reference image generation unit 30E that generates a reference image, and a photographing information transmission processing unit 30F that transmits the information indicating the location of the photographed portion and the reference image to the digital camera 100. The functions of the units are implemented by the CPU 11 executing a specific program (photographed-portion setting program).

The photographed-subject image acquisition unit 30A acquires an image of a photographed subject. This image is an image of the entire photographed subject. In a case where the photographed subject is photographed in sections and panoramic composition is performed, an image obtained as a result of panoramic composition is acquired. The photographed-subject image acquisition unit 30A acquires an image of a photographed subject from an external device (for example, a server) via the communication unit 21 or the short-range wireless communication unit 22. Alternatively, the photographed-subject image acquisition unit 30A acquires an image of a photographed subject from the memory card 25 via the media drive 24.

The display control unit 30B controls display on the display 15. The display control unit 30B is an example of a display control unit. The display control unit 30B displays the image of the photographed subject acquired by the photographed-subject image acquisition unit 30A on the display 15.

The photographed-portion setting unit 30C sets a photographed portion in the image of the photographed subject. The set photographed portion is a part of the photographed subject. The photographed-portion setting unit 30C sets a photographed portion on the basis of input from the touch panel 16. That is, the photographed-portion setting unit 30C sets a portion touched on the screen of the display 15 on which the image of the photographed subject is displayed as a photographed portion.

The photographed portion is specified as a point or a region. For example, in a case where a relatively small region is set as a photographed portion, the photographed portion is specified as a point. On the other hand, in a case where a relatively large region is specified as a photographed portion, the photographed portion is specified as a region. In a case of specification as a point, a user touches the center (including an area that is substantially recognized as the center) of a region that is set as a photographed portion to specify the photographed portion. In a case of specification as a region, a user touches a region that is set as a photographed portion so as to surround the region to specify the photographed portion.

The location information generation unit 30D generates information indicating the location of the photographed portion set by the photographed-portion setting unit 30C. In this embodiment, as information indicating the location of the photographed portion, the location information generation unit 30D generates an image by marking the photographed portion on the image of the photographed subject. The form of marking is not specifically limited. Any form may be employed as long as the set photographed portion can be recognized in the image. For example, a form can be employed in which the set photographed portion is pointed by an arrow or the set photographed portion is surrounded with a frame to indicate the location of the set photographed portion.

The reference image generation unit 30E generates a reference image by cutting an image including the set photographed portion and its surrounding area from the image of the photographed subject. For example, in a case where the photographed portion is specified as a point, the reference image generation unit 30E cuts an image of a certain area centered on the specified point (for example, an image of a rectangular region having a certain size and centered on the specified point) from the image of the photographed subject to generate a reference image. For example, in a case where the photographed portion is specified as a region, the reference image generation unit 30E cuts an image of a rectangular region that includes the specified region from the image of the photographed subject to generate a reference image. Accordingly, a reference image is generated so as to include a proper image of the surrounding area (an image that is successfully captured and has a high resolution).

The photographing information transmission processing unit 30F transmits the information indicating the location of the photographed portion generated by the location information generation unit 30D and the reference image generated by the reference image generation unit 30E to the digital camera 100. The photographing information transmission processing unit 30F transmits the information indicating the location of the photographed portion and the reference image to the digital camera 100 via the communication unit 21 or the short-range wireless communication unit 22.

### Digital Camera

The digital camera 100 has a function of providing a guide for photographing a photographed portion set by the photographed-portion setting apparatus 10 in addition to usual photographing and playback functions.

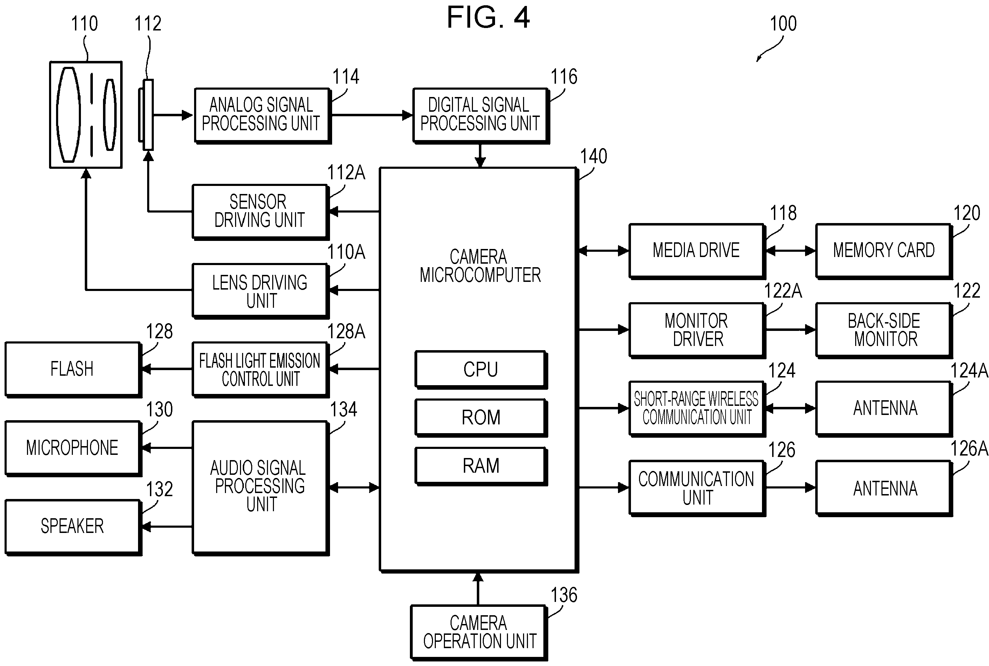

Fig. 4 is a block diagram illustrating a schematic configuration of the digital camera.

As illustrated in Fig. 4, the digital camera 100 includes an imaging lens 110, an image sensor 112, an analog signal processing unit 114, a digital signal processing unit 116, a media drive 118, a back-side monitor 122, a short-range wireless communication unit 124, a communication unit 126, a flash 128, a microphone 130, a speaker 132, an audio signal processing unit 134, a camera operation unit 136, and a camera microcomputer 140.

The imaging lens 110 forms an optical image of a photographic subject on a light-receiving surface of the image sensor 112. The imaging lens 110 has a focus adjusting function and a zoom function. The focus adjusting function and the zoom function are driven by a lens driving unit 110A and executed. The imaging lens 110 has a diaphragm and a shutter. The diaphragm and the shutter are driven by the lens driving unit 110A and operated. The lens driving unit 110A drives each part of the imaging lens 110 in accordance with an instruction from the camera microcomputer 140.

The image sensor 112 is formed of, for example, a two-dimensional solid-state imaging element, such as a CCD (charge-coupled device) image sensor or a CMOS (complementary metal-oxide semiconductor) image sensor. The image sensor 112 is driven by a sensor driving unit 112A and operated. The sensor driving unit 112A drives the image sensor 112 in accordance with an instruction from the camera microcomputer 140.

In the digital camera 100 of this embodiment, the imaging lens 110 and the image sensor 112 form a photographing unit.

The analog signal processing unit 114 takes in an analog image signal for each pixel output from the image sensor 112, performs specific signal processing (for example, correlative double sampling processing and amplification processing) for the analog image signal, and outputs a digitized signal.

The digital signal processing unit 116 takes in a digital image signal output from the analog signal processing unit 114, performs specific signal processing (for example, gradation transformation processing, white balance correction processing, gamma-correction processing, demosaicing processing, and YC conversion processing) for the digital image signal, and generates image data.

The media drive 118 reads and writes data from and to a memory card 120. The media drive 118 reads and writes data from and to the memory card 120 in accordance with an instruction from the camera microcomputer 140.

The back-side monitor 122 is formed of, for example, a liquid crystal display (LCD). The back-side monitor 122 is provided on the back side of the camera body. The back-side monitor 122 is an example of a second display unit. Display on the back-side monitor 122 is controlled by the camera microcomputer 140. The camera microcomputer 140 controls display on the back-side monitor 122 via a monitor driver 122A.

The short-range wireless communication unit 124 uses an antenna 124A to perform short-range wireless communication with an external device (for example, the photographed-portion setting apparatus 10).

The communication unit 126 uses an antenna 126A to wirelessly communicate with a nearby base station.

The flash 128 includes, for example, a xenon tube or an LED (light emitting diode) as a light source and causes the light source to emit light to irradiate a photographic subject with flash light. Light emission by the flash 128 is controlled by the camera microcomputer 140 via a flash light emission control unit 128A.

The microphone 130 collects external sound. The speaker 132 externally outputs sound. The audio signal processing unit 134 performs specific signal processing for an audio signal input from the microphone 130 and outputs a digitized signal. The audio signal processing unit 134 performs specific signal processing for audio data fed from the camera microcomputer 140 and outputs resulting sound via the speaker 132.

The camera operation unit 136 includes various operating members including a power button, a release button, a zoom key, a menu button, an OK button, a cancel button, a cross-shaped button, and a mode switching switch and a signal processing circuit for the operating members and outputs a signal based on an operation of each operating member to the camera microcomputer 140.

The camera microcomputer 140 is a control unit that centrally controls overall operations of the digital camera 100. The camera microcomputer 140 is formed of a microcomputer that includes a CPU, a ROM, and a RAM and executes a specific program to thereby function as, for example, a control unit of each part.

As described above, the digital camera 100 has the function of providing a guide for photographing a photographed portion set by the photographed-portion setting apparatus 10 in addition to usual photographing and playback functions. The usual photographing and playback functions are the same as those of a typical digital camera. Therefore, the guide function is described below.

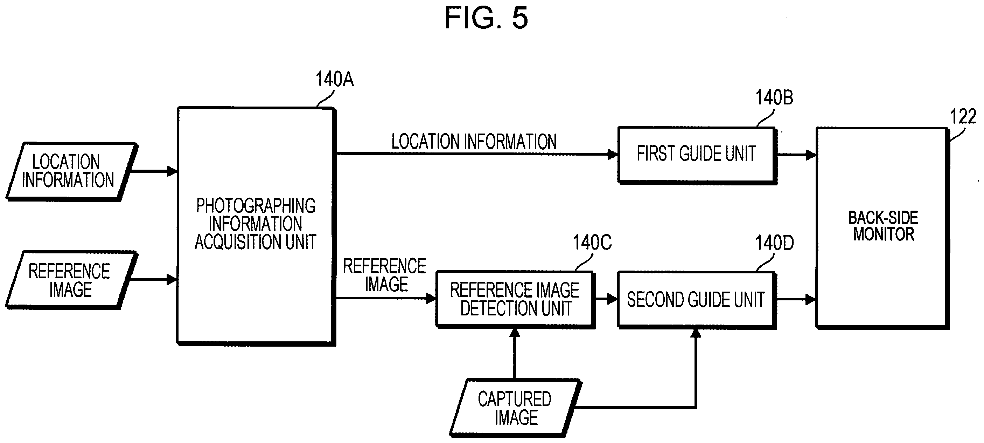

Fig. 5 is a block diagram of a configuration for implementing the guide function.

As illustrated in Fig. 5, the guide function of the digital camera 100 is mainly implemented as a photographing information acquisition unit 140A that acquires information indicating the location of a photographed portion and a reference image, a first guide unit 140B that provides a guide for photographing the photographed portion on the basis of the information indicating the location of the photographed portion (location information), a reference image detection unit 140C that detects in real time, the reference image from an image captured by the image sensor 112 through the imaging lens 110, and a second guide unit 140D that provides a guide for photographing the photographed portion on the basis of the result of detection by the reference image detection unit 140C. The units are implemented by the camera microcomputer 140 executing a specific program.

The photographing information acquisition unit 140A acquires location information and a reference image from the photographed-portion setting apparatus 10. The photographing information acquisition unit 140A, for example, communicates with the photographed-portion setting apparatus 10 via the communication unit 126 and acquires location information and a reference image from the photographed-portion setting apparatus 10. Alternatively, the photographing information acquisition unit 140A performs short-range wireless communication with the photographed-portion setting apparatus 10 via the short-range wireless communication unit 124 and acquires location information and a reference image from the photographed-portion setting apparatus 10. The acquired location information is fed to the first guide unit 140B, and the acquired reference image is fed to the reference image detection unit 140C.

The first guide unit 140B provides a guide for photographing a photographed portion on the basis of the location information. As described above, in the photographing system of this embodiment, location information is formed of a specific marking image. That is, location information is formed of an image obtained by marking the photographed portion on an image of the photographed subject. The first guide unit 140B displays this marking image on the back-side monitor 122 to provide a guide for photographing the photographed portion. The photographing person views the marking image displayed on the back-side monitor 122 to grasp the approximate position of the photographed portion.

The reference image detection unit 140C detects in real time, a region that matches the reference image from an image captured by the image sensor 112 through the imaging lens 110. A technique for this type of image recognition is publicly known, and therefore, a detailed description thereof is omitted (for example, various methods can be employed including a method in which feature points are extracted from the reference image and the captured image and compared with each other to detect a region of the reference image from the captured image).

The second guide unit 140D provides a guide for photographing the photographed portion on the basis of the result of detection by the reference image detection unit 140C. In this embodiment, the image captured by the image sensor 112 through the imaging lens 110 is displayed on the back-side monitor 122 in real time as a live preview image and in a case where the reference image is detected, information indicating the region of the reference image is superimposed on the live preview image and displayed to thereby provide a guide for photographing the photographed portion. More specifically, a frame (detection frame) that indicates the region of the reference image is superimposed on the live preview image and displayed to thereby provide a guide for photographing the photographed portion. At this time, the second guide unit 140D displays the frame in different display forms in a case where part of the reference image is detected from the captured image and in a case where the entire reference image is detected from the captured image. More specifically, in the case where part of the reference image is detected from the captured image, the second guide unit 140D displays a red frame. On the other hand, in the case where the entire reference image is detected from the captured image, the second guide unit 140D displays a blue frame. The photographing person adjusts the photographing angle and so on such that the frame fits in the angle of view and performs photographing. Accordingly, the specified photographed portion can be accurately photographed.

### Photographing Method

Now, a photographing method using the photographing system of this embodiment is described.

Here, an example case where a photographed subject is photographed in sections and panoramic composition is performed and where re-photographing of a part of the photographed subject is performed is described. Here, an example case where a floor slab of a bridge is photographed is described. Specifically, an example case where a floor slab is photographed for the purpose of inspection is described.

### Bridge

First, a bridge is described.

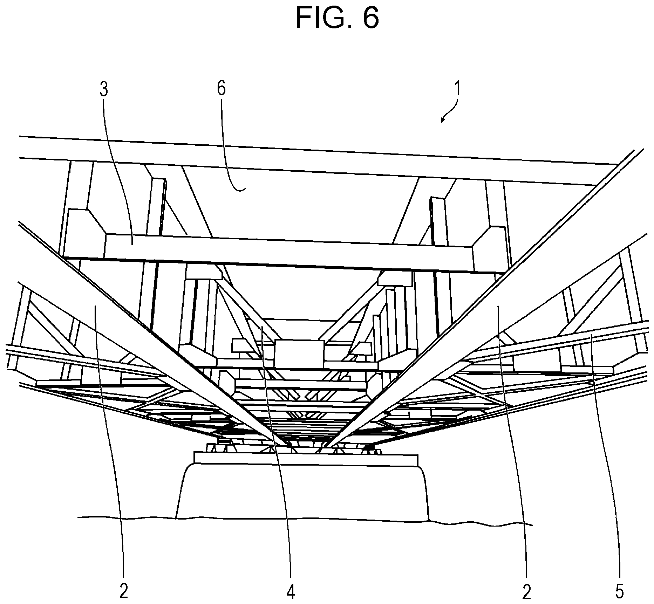

Fig. 6 is a perspective view of a bridge when viewed from underneath.

A bridge 1 of this example has a three-dimensional construction including main girders 2, cross girders 3, sway bracing 4, lateral bracing 5, and a floor slab 6 and has a construction such that these members are coupled with bolts and rivets, by welding, and so on. Over the main girders 2 and so on, the floor slab 6 on which vehicles, and so on are traveling is formed by pouring concrete. The floor slab 6 is typically built of reinforced concrete. The main girders 2 are members that are laid between abutments or piers to bear the load of vehicles and so on traveling on the floor slab 6. The main girders 2 have a plane (plane in the vertical direction) orthogonal to a plane (horizontal plane) of the floor slab 6. The cross girders 3 are members that each couple the main girders 2. The cross girders 3 are provided such that the plurality of main girders 2 bear the load. The sway bracing 4 and the lateral bracing 5 are members that couple the main girders 2 with each other. The sway bracing 4 and the lateral bracing 5 are provided to resist lateral loads imposed by winds and earthquakes.

Photographing of the floor slab 6 for the purpose of inspection is performed on a per panel basis. A panel is one division of the floor slab 6 partitioned by the main girders 2 and the cross girders 3. Therefore, in photographing of the floor slab 6 for the purpose of inspection, a panel is a photographed subject, photographing in sections is performed on a per panel basis, and panoramic composition is performed.

### Photographing of Panel

Now, a method for photographing a panel in a case of panoramic composition is described.

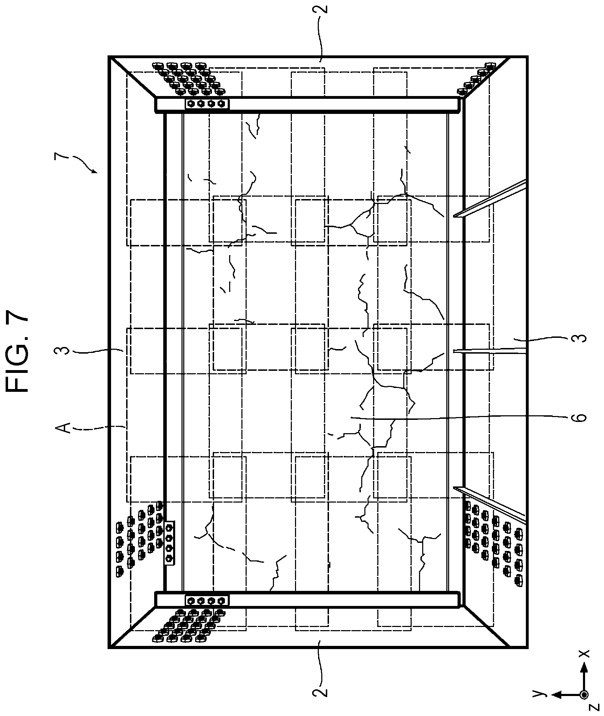

Fig. 7 is a diagram illustrating an example of a procedure for photographing a panel in a case of panoramic composition.

In a case of panoramic composition, a photographed subject is divided into a plurality of regions and the plurality of regions are separately photographed (photographed in sections). **In** Fig. 7, a dashed-line frame indicated by reference character A is a frame representing an area photographed by a single photographing operation. The example illustrated in Fig. 7 illustrates a state where a photographing person sequentially photographs regions in a panel 7 while moving in a y direction and in an x direction.

The photographing person (inspection technician) basically faces the floor slab 6 and performs photographing from a constant distance. Further, the photographing person basically performs photographing such that adjacent photographed regions partially overlap. Panoramic Composition

A plurality of images acquired by photographing are subjected to panoramic composition to form a single image. A technique for panoramic composition is publicly known, and therefore, a detailed description thereof is omitted. For example, correspondence points in images are detected to concatenate the images and compose a single image. At this time, each image is subjected to corrections including a sizing correction, a tilt correction, and a rotation correction as necessary.

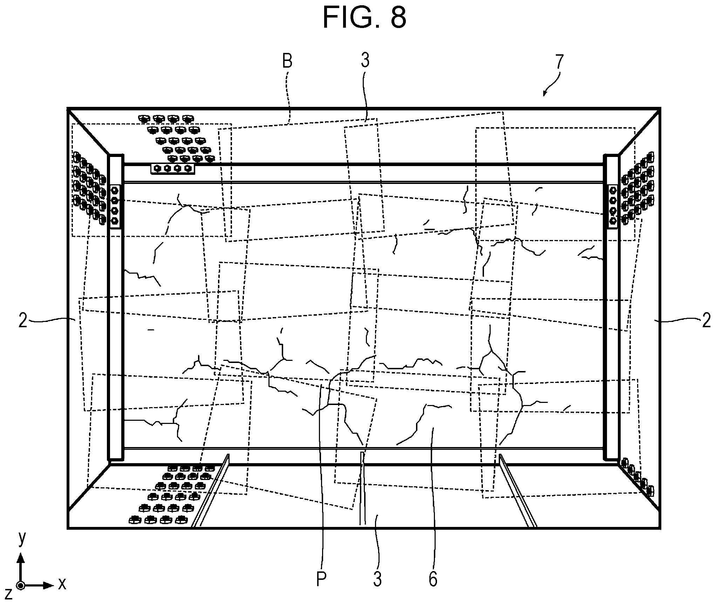

Fig. 8 is a diagram illustrating an example of the result of photographing in sections. In Fig. 8, a dashed-line frame indicated by reference character B is a frame representing the area of an image acquired by a single photographing operation. As illustrated in Fig. 8, in this example, a portion P omitted from photographing is present.

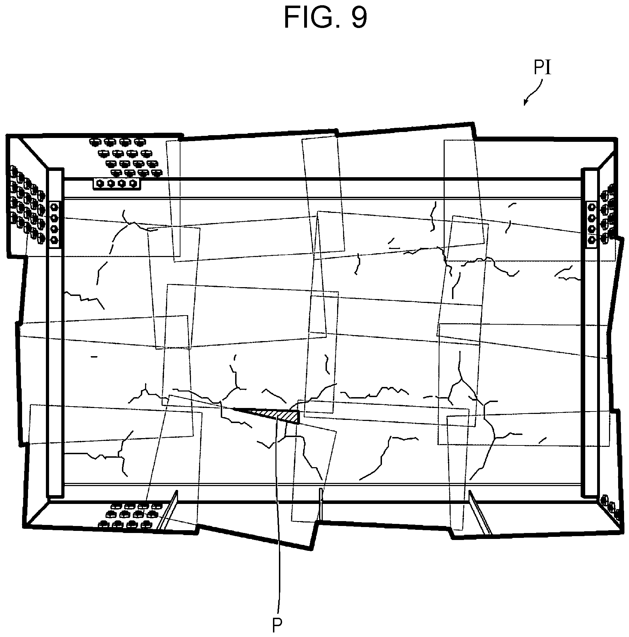

Fig. 9 is a diagram illustrating an example of a panoramic composite image generated on the basis of the result of photographing illustrated in Fig. 8. In Fig. 9, combined images are represented by dashed lines. As illustrated in Fig. 9, in a case where an omission of photographing is present, an image in which the portion P omitted from photographing is missing (an image that is partially incomplete) is generated as a panoramic composite image PI.

Such an omission of photographing is usually found after panoramic composition. In a case where an omission of photographing is found, the portion P omitted from photographing is re-photographed, and a composition process is re-performed. A procedure for re-photographing a portion omitted from photographing by using the photographing system of this embodiment is described below.

A process for re-photographing is divided into setting of a photographed portion and actual photographing. Setting of a photographed portion is performed by using the photographed-portion setting apparatus 10, and photographing is performed by using the digital camera 100.

### Setting of Photographed Portion

As described above, setting of a photographed portion is performed by using the photographed-portion setting apparatus 10.

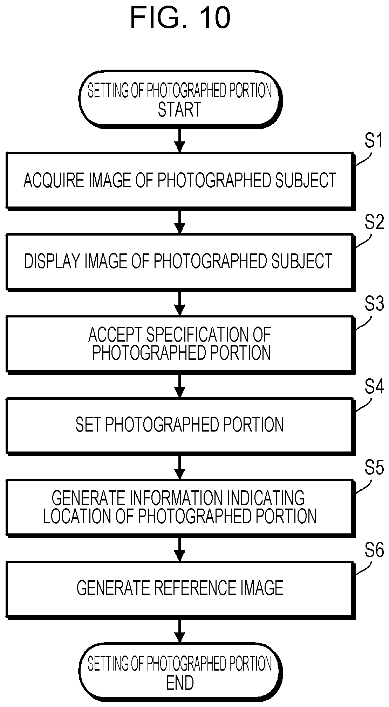

Fig. 10 is a flowchart illustrating a procedure of a process performed by the photographed-portion setting apparatus.

First, an image of a photographed subject is acquired (step S1). An image of a photographed subject is acquired from an external device (for example, a server) via the communication unit 21 or the short-range wireless communication unit 22. Alternatively, an image of a photographed subject is acquired from the memory card 25 via the media drive 24. An image of a photographed subject here is an image of a panel and is the panoramic composite image PI acquired by photographing the panel in sections.

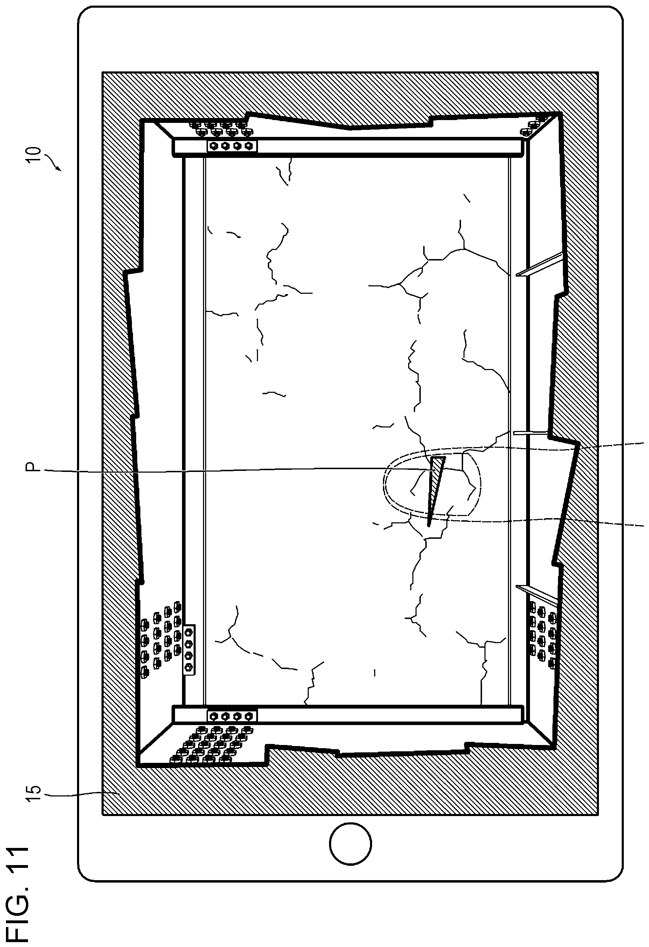

Next, the acquired image of the photographed subject is displayed on the display 15 (step S2). Fig. 11 is a diagram illustrating example display of an image of a photographed subject on the display. The image is enlarged, reduced, or moved on the basis of an operation of the touch panel 16. For example, the image is reduced by a pinch-in operation on the screen, or is enlarged by a pinch-out operation. The image is moved by a swipe operation on the screen.

Next, specification of a photographed portion is accepted on the screen of the display 15 on which the image of the photographed subject is displayed (step S3). Specification of a photographed portion is performed by touching a portion that is set as a photographed portion on the screen of the display 15 with a finger. In this example, the portion P omitted from photographing is re-photographed, and therefore, the portion P omitted from photographing is touched on the screen to specify a photographed portion. In this example, the portion P omitted from photographing is small, and therefore, the photographed portion is specified as a point. In this case, the center of the portion that is set as the photographed portion (the portion omitted from photographing) is touched with a finger to specify the photographed portion.

Next, the specified portion is set as the photographed portion (step S4). The specified portion is detected by the touch panel 16. Therefore, the photographed portion is set on the basis of the result of detection by the touch panel 16.

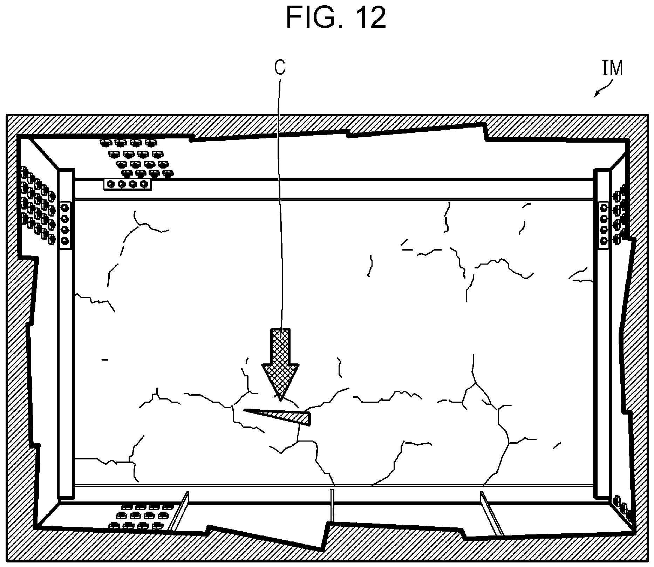

Next, information indicating the location of the set photographed portion (location information) is generated (step S5). In this embodiment, as the location information, an image obtained by marking the photographed portion on the image of the photographed subject (marking image) is generated. Fig. 12 is a diagram illustrating an example of a marking image. In this example, an image in which a set photographed portion is pointed by arrow C is generated as a marking image IM.

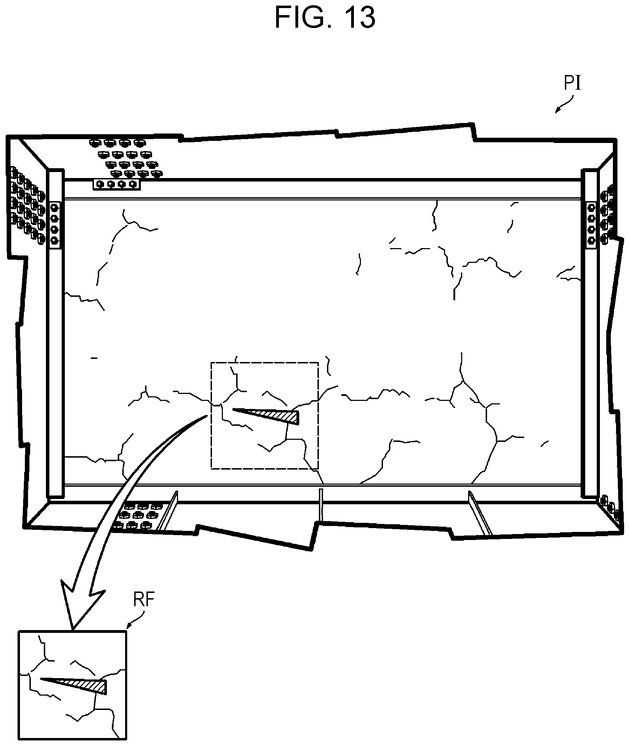

Next, a reference image is generated (step S6). A reference image is generated by cutting an image that includes the set photographed portion and its surrounding area from the image of the photographed subject. Fig. 13 is a conceptual diagram of generation of a reference image. As illustrated in Fig. 13, a rectangular region having a certain size and centered on the set photographed portion is cut from the image of the photographed subject to generate a reference image RF.

The series of steps described above is performed and the process for setting a photographed portion is completed. Subsequently, actual photographing is performed on the basis of the set information.

### Photographing

Photographing is performed by using the digital camera 100. The digital camera 100 acquires location information (in this example, a marking image) and a reference image from the photographed-portion setting apparatus 10 and provides a guide for photographing the photographed portion on the basis of the acquired information. The guide is provided while the mode of the digital camera 100 is set to a specific mode (photographing guide mode).

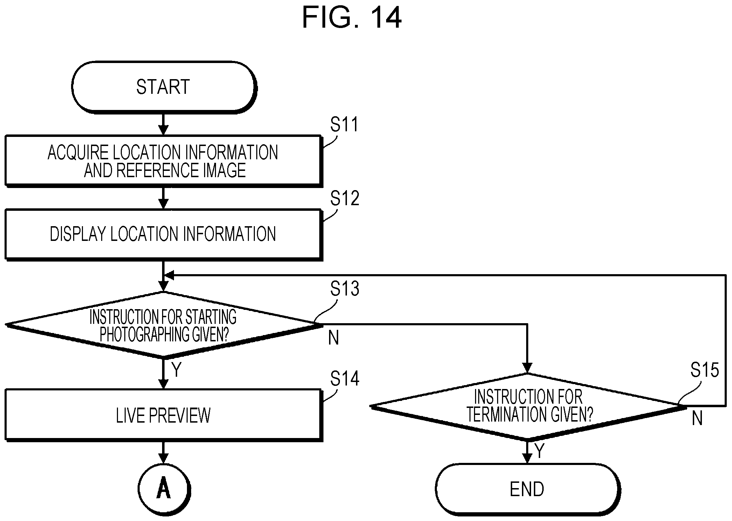

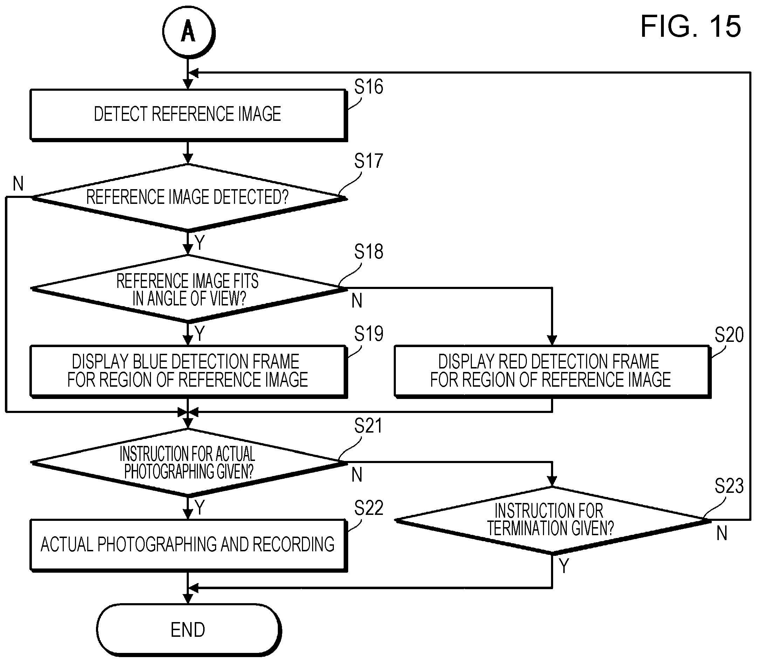

Fig. 14 and Fig. 15 are flowcharts illustrating a procedure of a process performed by the digital camera in a case where the photographing guide mode is set.

First, location information and a reference image are acquired (step S11). Location information and a reference image are acquired from the photographed-portion setting apparatus 10. The digital camera 100 communicates with the photographed-portion setting apparatus 10 and acquires location information and a reference image from the photographed-portion setting apparatus 10.

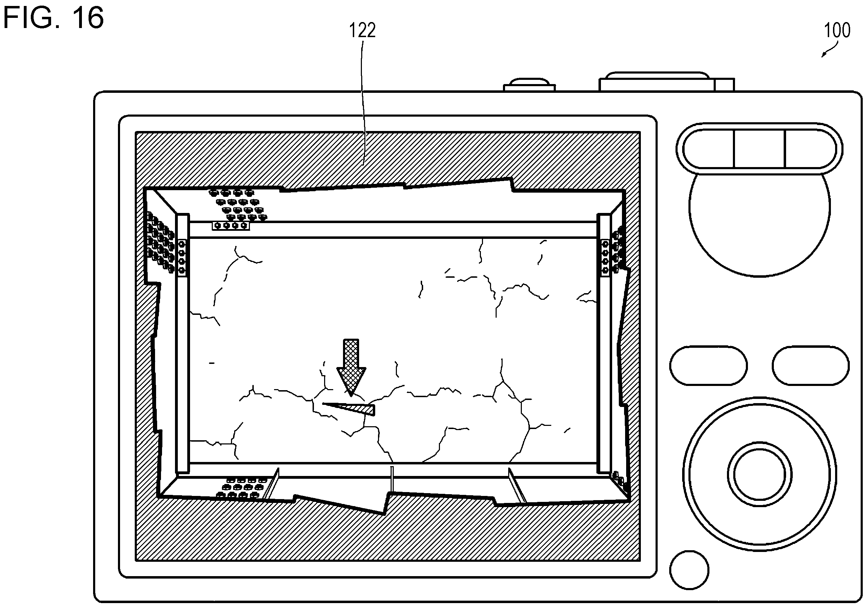

Next, the acquired location information is displayed on the back-side monitor 122 (step S12). As described above, the location information is a marking image obtained by marking the photographed portion on an image of the photographed subject, and therefore, the marking image is displayed on the back-side monitor 122. Fig. 16 is a diagram illustrating example display of a marking image on the display. The user (photographing person) views the marking image displayed on the back-side monitor 122 and can grasp where the photographed portion is. That is, the marking image is displayed to thereby provide a guide to the photographed portion.

Next, on the basis of operation input from the camera operation unit 136, the presence or absence of an instruction for starting photographing is determined (step S13). An instruction for starting photographing is given by, for example, half-push of the release button. The user (photographing person) gives an instruction for starting photographing at a position from which the photographed portion can be photographed.

In a case where an instruction for starting photographing is given, a live preview is started (step S14). An image captured by the image sensor 112 through the imaging lens 110 is displayed on the back-side monitor 122 in real time.

In a case where no instruction for starting photographing is given, the presence or absence of an instruction for termination is determined (step S15). For example, in a case of switching to another mode (for example, a usual photographing mode or a playback mode) or in a case of turning off the power, it is determined that an instruction for termination is given. In this case, the photographing guide mode ends.

Simultaneously with the start of the live preview, the reference image is detected from the captured image in real time (step S16). On the basis of the result of detection, it is determined whether the reference image is detected (step S17).

In a case where the reference image is detected, it is determined whether the reference image fits in the angle of view (step S18). That is, it is determined whether the entire reference image is detected.

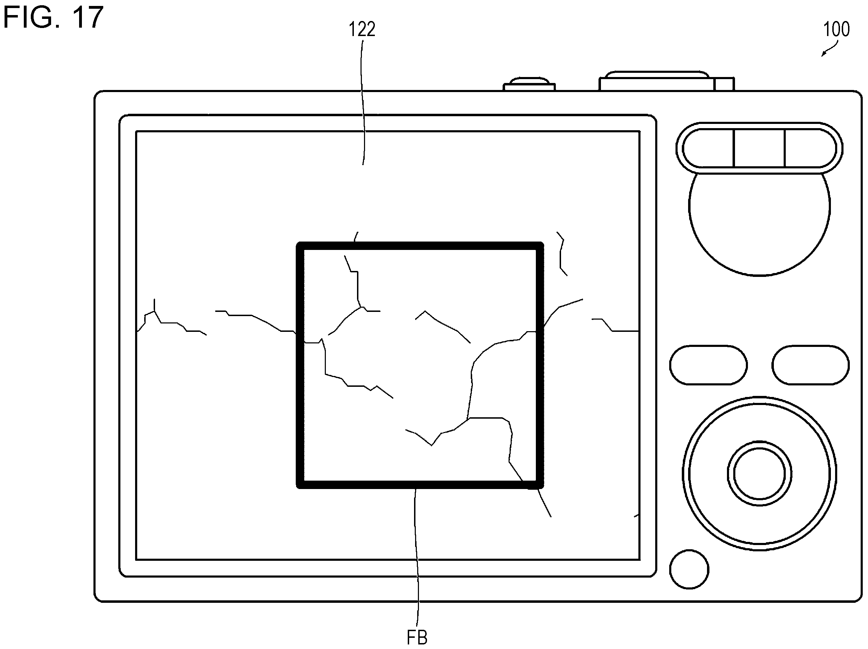

In a case where the reference image fits in the angle of view, a blue detection frame FB indicating the region of the reference image is superimposed on the live preview image and displayed (step S19). Fig. 17 is a diagram illustrating example display of a detection frame in a case where a reference image fits in the angle of view. The user (photographing person) views this display on the back-side monitor 122 to confirm that the specified photographed portion fits in the angle of view.

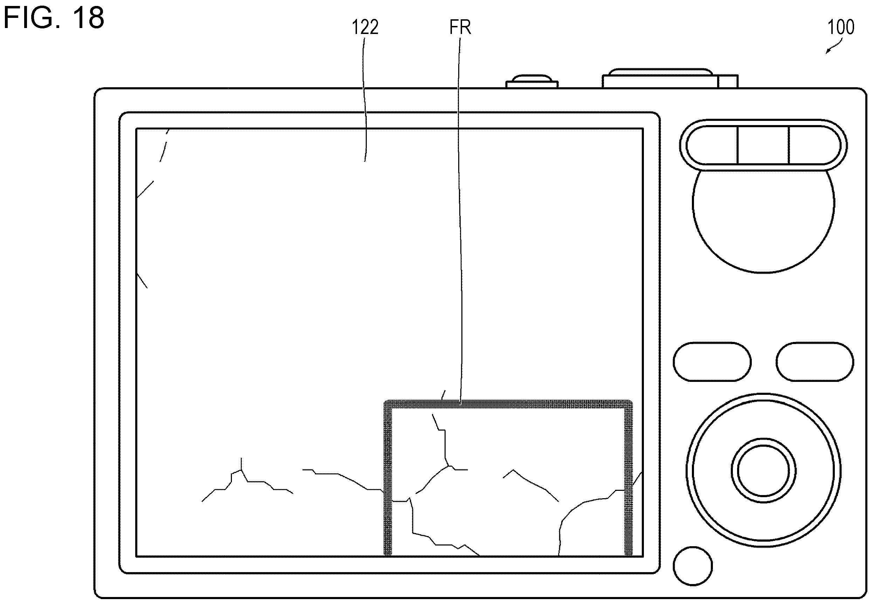

On the other hand, in a case where the reference image does not fit in the angle of view, that is, only part of the reference image is detected, a red detection frame FR indicating the region of the reference image is superimposed on the live preview image and displayed (step S20). Fig. 18 is a diagram illustrating example display of a detection frame in a case where a reference image does not fit in the angle of view. The user (photographing person) views this display on the back-side monitor 122 to confirm the position of the specified photographed portion. In the example illustrated in Fig. 18, the red detection frame FR is displayed on the bottom right of the screen. Therefore, in this case, the user (photographing person) adjusts the photographing position and/or the photographing direction such that the detection frame FR fits in the angle of view.

Thereafter, the presence or absence of an instruction for actual photographing is determined (step S21). That is, the presence or absence of an instruction for taking in an image for recording is determined. An instruction for actual photographing is given by pressing the release button.

In a case where an instruction for actual photographing is given, a process for actual photographing is performed, and an acquired image is recorded (step S22). That is, an image for recording is taken in and recorded to the memory card 120. Thereafter, the photographing guide mode ends.

On the other hand, in a case where no instruction for actual photographing is given, the presence or absence of an instruction for termination is determined (step S23). In a case where it is determined that an instruction for termination is given, the photographing guide mode ends. On the other hand, in a case where it is determined that no instruction for termination is given, the flow returns to step S16, and detection of the reference image is performed again.

Accordingly, with the photographing system of this embodiment, a guide for photographing is appropriately provided, and therefore, a specified photographed portion can be easily photographed.

### Modifications

### Other Examples of Method for Specifying Photographed Portion

As described above, a photographed portion may be specified by touching a region that is set as the photographed portion so as to surround the region on the screen on which an image of the photographed subject is displayed. That is, a region that is set as a photographed portion is surrounded with a frame to specify the photographed portion.

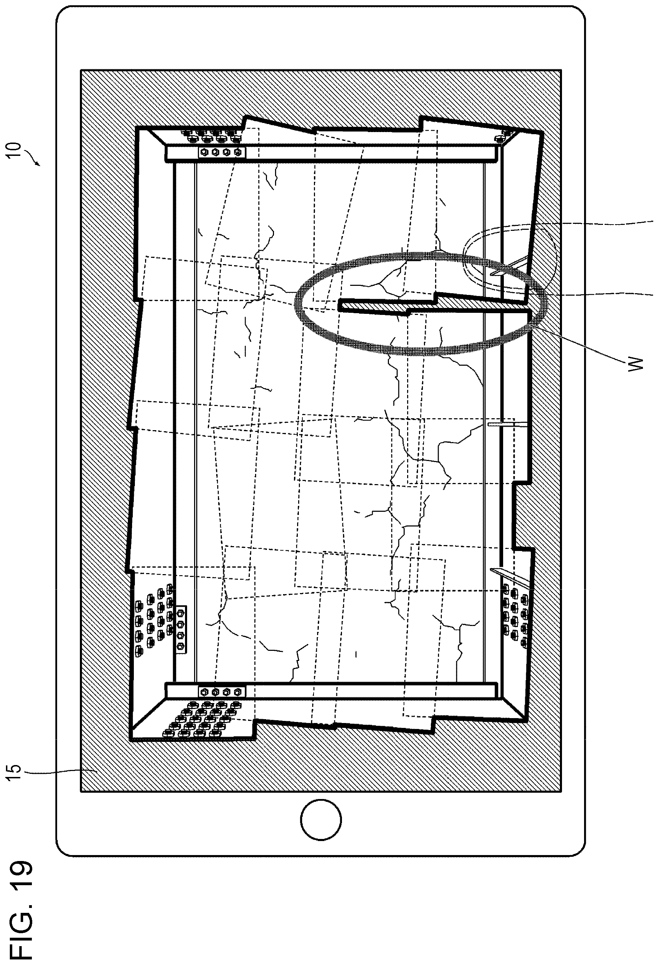

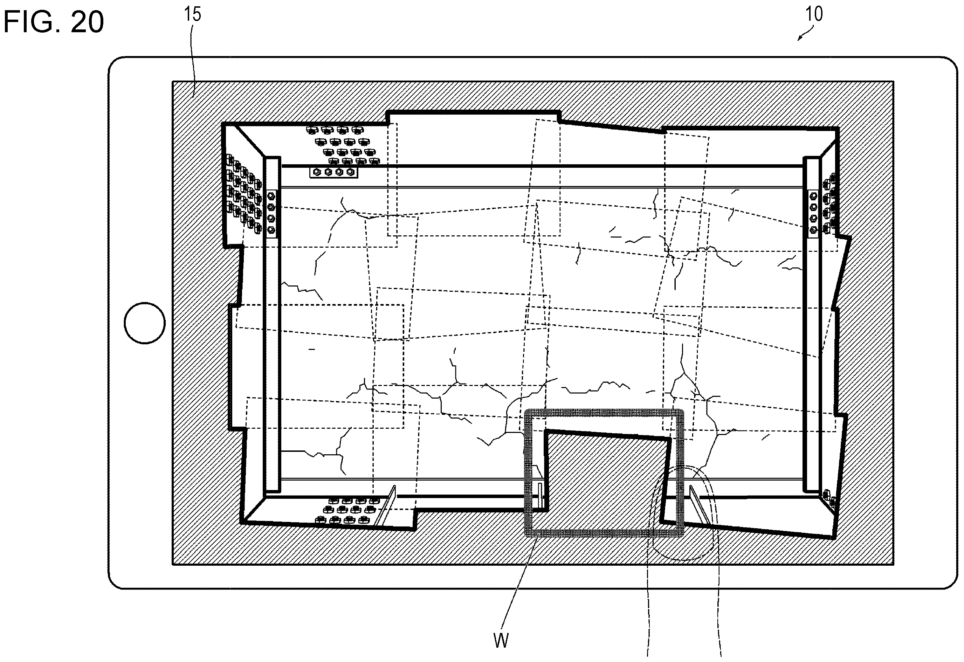

Fig. 19 and Fig. 20 are diagrams each illustrating an example case where a region that is set as a photographed portion is surrounded with a frame to specify the photographed portion. Fig. 19 illustrates an example case where a photographed portion is surrounded with a frame having an elliptic shape to specify the photographed portion, and Fig. 20 illustrates an example case where a photographed portion is surrounded with a frame having a rectangular shape to specify the photographed portion.

In a case where a region that is set as a photographed portion is surrounded with a frame to specify the photographed portion, as illustrated in Fig. 19 and Fig. 20, it is preferable to superimpose on the image and display a frame W that indicates a specified region. Accordingly, the specified region can be identified.

It is preferable to make the position and size of the frame W indicating a specified region be adjustable. For example, it is preferable to make the position of the frame W be adjustable by touching and swiping the region of the frame W and to make the size of the frame W be enlarged or reduced by performing a pinch-in or pinch-out operation in the region of the frame W.

Note that in the above-described embodiment, a configuration is employed in which a photographed portion is specified on the touch panel 16; however, means for specifying a photographed portion is not limited to this. **In** a case where the computer that forms the photographed-portion setting apparatus 10 includes an input device, such as a mouse, a joystick, or a keyboard, a configuration can be employed in which such an input device is used to specify a photographed portion.

In the above-described embodiment, an example case has been described where a portion omitted from photographing is specified as a photographed portion; however, a portion that is set as a photographed portion is not limited to this. For example, in a panoramic composite image, a region having an image quality less than or equal to a specified criterion needs to be re-photographed, and therefore, such a region can be specified as a photographed portion.

In the above-described embodiment, an example case where only one photographed portion is set has been described; however, a plurality of photographed portions can be set. Method for Automatically Setting Photographed Portion

In the above-described embodiment, a configuration is employed in which a user specifies a portion that is set as a photographed portion on the screen on which an image of the photographed subject is displayed to set the photographed portion; however, a configuration can be employed in which a photographed portion is automatically set.

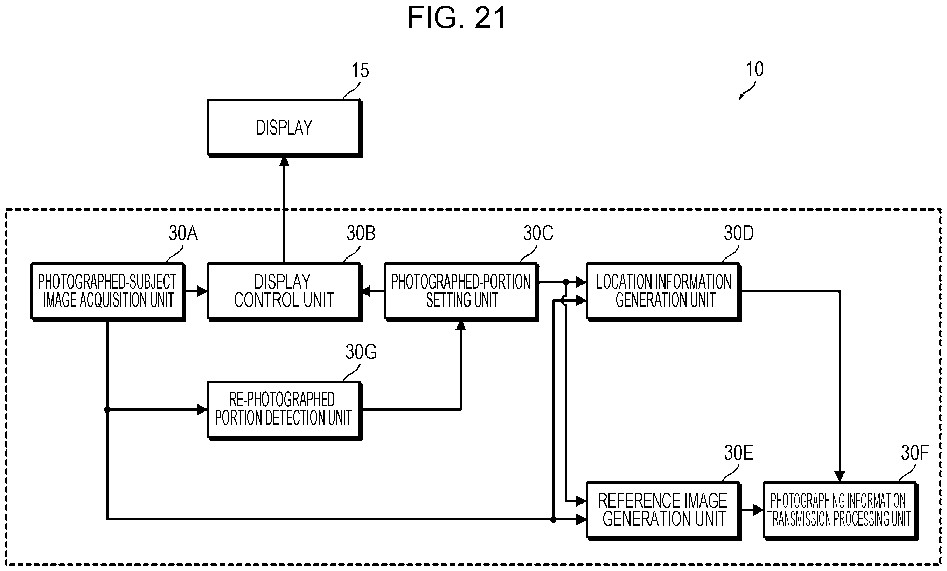

Fig. 21 is a functional block diagram of the photographed-portion setting apparatus in a case where a photographed portion is automatically set.

The photographed-portion setting apparatus 10 of this example automatically detects a portion that needs to be re-photographed from an image of the photographed subject and automatically sets a photographed portion. Specifically, the photographed-portion setting apparatus 10 of this example is configured as an apparatus that automatically detects from a panoramic composite image, a region whose image is partially missing (a region whose image is incomplete) and a region having an image quality less than or equal to a specified criterion and sets the regions as photographed portions.

As illustrated in Fig. 21, the photographed-portion setting apparatus 10 of this example includes a re-photographed portion detection unit 30G in addition to the configuration of the photographed-portion setting apparatus 10 of the above-described first embodiment.

The re-photographed portion detection unit 30G analyzes an image of a photographed subject and detects a portion that needs to be re-photographed. In this example, the re-photographed portion detection unit 30G detects from a panoramic composite image, a region whose image is partially missing and a region having an image quality less than or equal to a specified criterion as portions that need to be re-photographed. The result of detection by the re-photographed portion detection unit 30G is fed to the photographed-portion setting unit 30C.

The photographed-portion setting unit 30C sets a photographed portion on the basis of the result of detection by the re-photographed portion detection unit 30G. For example, the photographed-portion setting unit 30C surrounds the detected region with a rectangular frame to set the photographed portion. Information about the set photographed portion is fed to the location information generation unit 30D, the reference image generation unit 30E, and the display control unit 30B.

The display control unit 30B displays the information indicating the set photographed portion on the display 15. For example, the display control unit 30B superimposes on the image of the photographed subject that is being displayed on the display 15 and displays a frame indicating the photographed portion.

Accordingly, a configuration can be employed in which a photographed portion is automatically set. In such a case where a portion that needs to be re-photographed is automatically detected and set as a photographed portion, it is preferable to allow the user to correct the automatically set photographed portion. For example, in the above-described example, a frame that indicates a photographed portion is superimposed on the image of the photographed subject that is being displayed on the display 15 and displayed, and therefore, it is preferable to allow correction of the position, size, and so on of the frame as necessary. Further, it is preferable to allow addition, deletion, and so on of a frame as necessary. A correction is made by using the touch panel 16.

### Other Examples of Information Indicating Location of Photographed Portion

In the above-described embodiment, as information indicating the location of a photographed portion, an image obtained by marking the photographed portion on an image of the photographed subject is generated; however, a form of information indicating the location of a photographed portion is not limited to this. Any information may be used as long as a photographed portion can be identified.

### (1) Method for Indicating Location of Photographed Portion by Lot Number

In a case where a photographed subject is divided into a plurality of zones and each zone is assigned a lot number, the location of a photographed portion can be indicated by using information of a lot number.

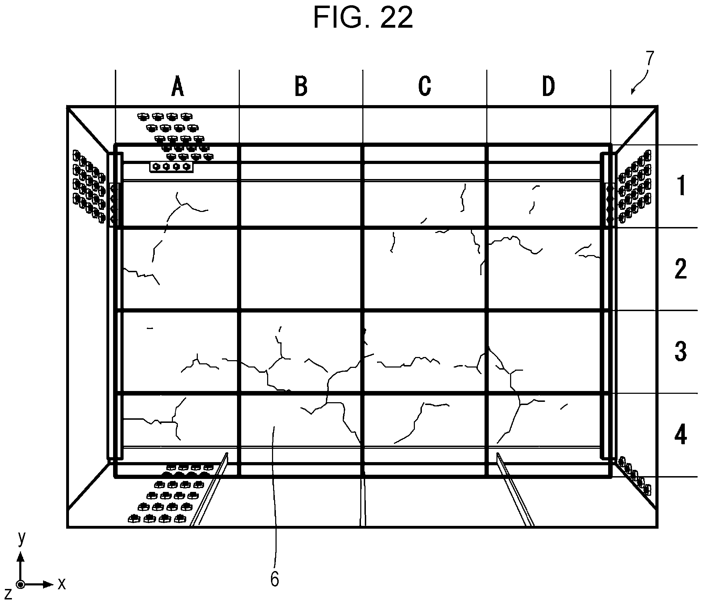

Fig. 22 is a conceptual diagram illustrating an example of assigning lot numbers to a photographed subject.

In the example illustrated in Fig. 22, one panel 7 of the floor slab 6 that is a photographed subject is divided into 16 regions in a grid form and each divided region is assigned a lot number indicating its location. Each lot number is expressed by a combination of an alphabetical character and a number. Specifically, a position in the x direction is expressed by an alphabetical character and a position in the y direction is expressed by a number to thereby assign a lot number to each divided region. For example, in Fig. 22, the lot number of the region in the top left corner is "A1", and the lot number of the region to the right is "B1".

In photographing for the purpose of panoramic composition, it is a common practice to divide a photographed subject into regions in a grid from and assign a lot number to each divided region. In such a case, information of lot numbers used in photographing can be used as is.

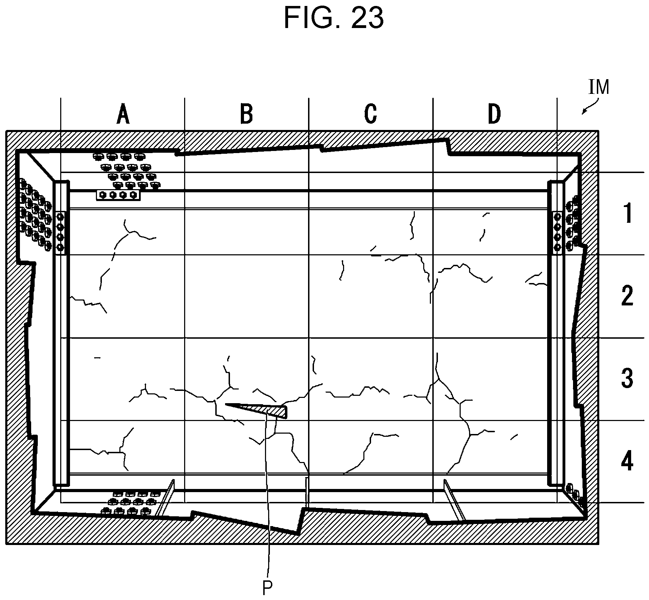

Fig. 23 is a conceptual diagram of generation of location information using information of a lot number.

As illustrated in Fig. 23, in a case where the portion P omitted from photographing is specified as a photographed portion, the lot number of a region in which the specified portion is present is information indicating the location of the photographed portion.

In the example illustrated in Fig. 23, the photographed portion (the portion P omitted from photographing) is present in a region having a lot number "B3", and therefore, information indicating the location of the photographed portion is "B3".

### (2) Method for Indicating Location by Using GPS Information

In a case where a photographed subject is a structure such as a bridge, GPS information of a portion specified as a photographed portion (information about the position on the globe) may be used as location information.

For example, in a case of photographing by using a camera including a GPS function, GPS information is recorded to tag information of the image (for example, Exif (Exchangeable image file format) tag information). Therefore, in a case where an image of a photographed subject is a panoramic composite image obtained by performing panoramic composition for a plurality of images and each of the images before composition has GPS information, the GPS information of each image can be used to acquire GPS information of a photographed portion. For example, GPS information of an image of a portion specified as a photographed portion or GPS information of an image of its vicinity is acquired, and GPS information of the portion specified as a photographed portion can be acquired accordingly. Alternatively, from GPS information of an image of a vicinity of a portion specified as a photographed portion, GPS information of the photographed portion is calculated, and GPS information of the photographed portion can be acquired accordingly.

In a case of a structure such as a bridge, GPS information can be acquired by using map data, data of a design drawing, and so on.

Note that GPS information at least includes information of the latitude and the longitude and may additionally include information of the altitude.

### (3) Other Methods

In a case where an image obtained by marking a photographed portion on an image of the photographed subject is generated as information indicating the location of the photographed portion, the image may be reduced so as to have a specified size and the generated reduced image may be used as a marking image. Accordingly, a load of, for example, transmitting data of the image to the digital camera 100 can be reduced. It is preferable to set the reduced size by taking into consideration the resolution and so on of a display unit included in the photographing apparatus.

### Other Examples of Guide Method by First Guide Unit

In a case where lot-number information is used as information indicating the location of a photographed portion, the digital camera 100 acquires and displays on the back-side monitor 122 the lot-number information. In this case, the digital camera 100 may simultaneously acquire an image of the photographed subject and displays the image on the back-side monitor 122 together with the lot-number information.

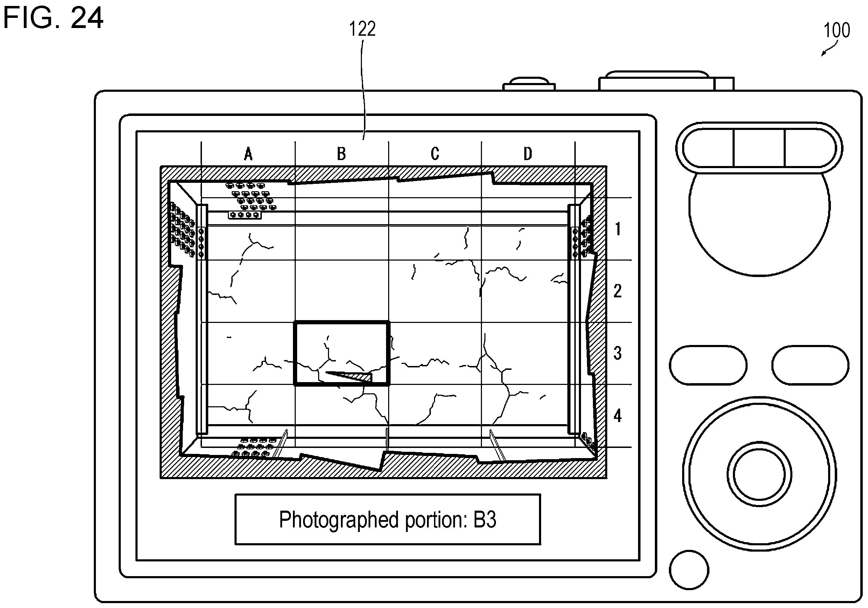

Fig. 24 is a diagram illustrating an example of a guide method using lot-number information. As illustrated in Fig. 24, information of the lot number of a photographed portion is displayed on the back-side monitor 122. In the example illustrated in Fig. 24, an image of the photographed subject is simultaneously displayed.

In a case where GPS information is used as information indicating the location of a photographed portion, the digital camera 100 acquires and displays on the back-side monitor 122 the GPS information.

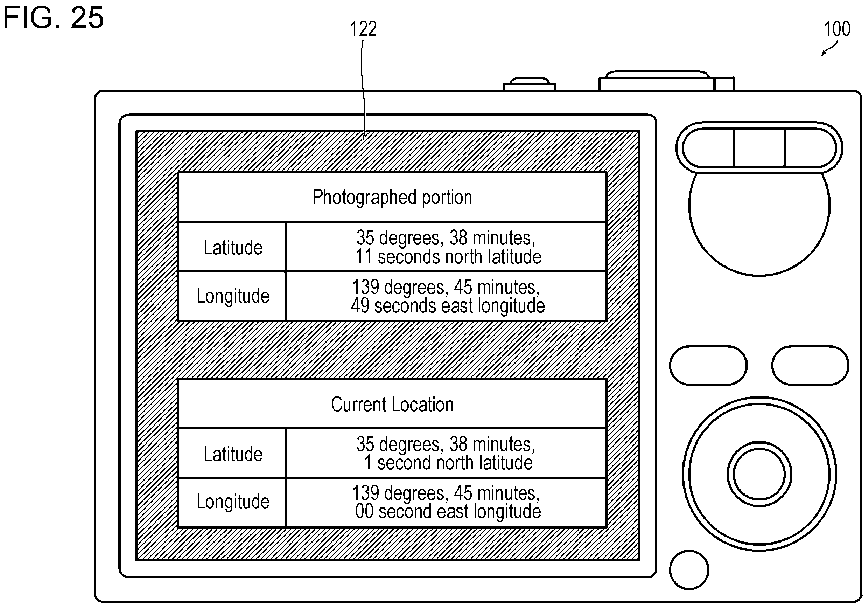

In a case where the digital camera 100 includes a GPS function, it is preferable to acquire GPS information of the current location and display the GPS information on the back-side monitor 122 together with GPS information of a photographed portion. Fig. 25 is a diagram illustrating an example case where GPS information of a photographed portion and GPS information of the current location are displayed.

In the case where the digital camera 100 includes a GPS function, GPS information of the current location is acquired and compared with GPS information of a photographed portion. In a case where the pieces of GPS information match or the current location is within a certain area centered on the photographed portion, sound or display may be used to give a notification that the pieces of GPS information match or the current location is within a certain area centered on the photographed portion.

### Other Examples of Photographing Apparatus

In the above-described embodiment, the photographing apparatus is formed of a digital camera; however, the configuration of the photographing apparatus is not limited to this. The photographing apparatus can be formed of a portable electronic device including a photographing function, such as a smartphone, a tablet computer, or a laptop computer.

### Second Embodiment

### Configuration

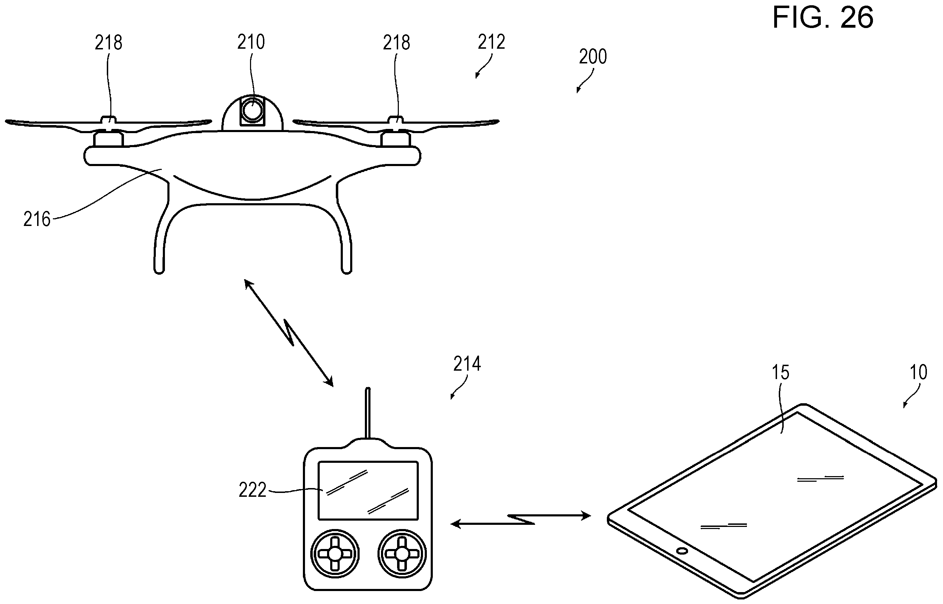

Fig. 26 is a diagram illustrating a system configuration of a second embodiment of the photographing system according to the present invention.

The configuration of the photographing apparatus of the photographing system of this embodiment is different from that in the photographing system of the above-described first embodiment. The photographing system of this embodiment performs photographing with an unattended aircraft equipped with a digital camera.

As illustrated in Fig. 26, a photographing apparatus 200 is formed of an unattended aircraft 212 equipped with a digital camera 210 and a controller 214 that remotely controls flight of the unattended aircraft 212 and photographing by the digital camera 210.

The unattended aircraft 212 is a drone and has an airframe 216 including a plurality of propellers 218 that are rotated to thereby fly in the air. The unattended aircraft 212 is an example of an unattended vehicle.

The digital camera 210 is an example of a photographing unit. The digital camera 210 has a pan and tilt function and can change the photographing direction. The pan and tilt function is implemented by a pan and tilt mechanism not illustrated. The pan and tilt mechanism is an example of a photographing direction change unit. The digital camera 210 is remotely operated by the controller 214 and panned and tilted.

The controller 214 wirelessly communicates with the unattended aircraft 212 and remotely operates the unattended aircraft 212 and the digital camera 210. The controller 214 is an example of a remote operation unit.

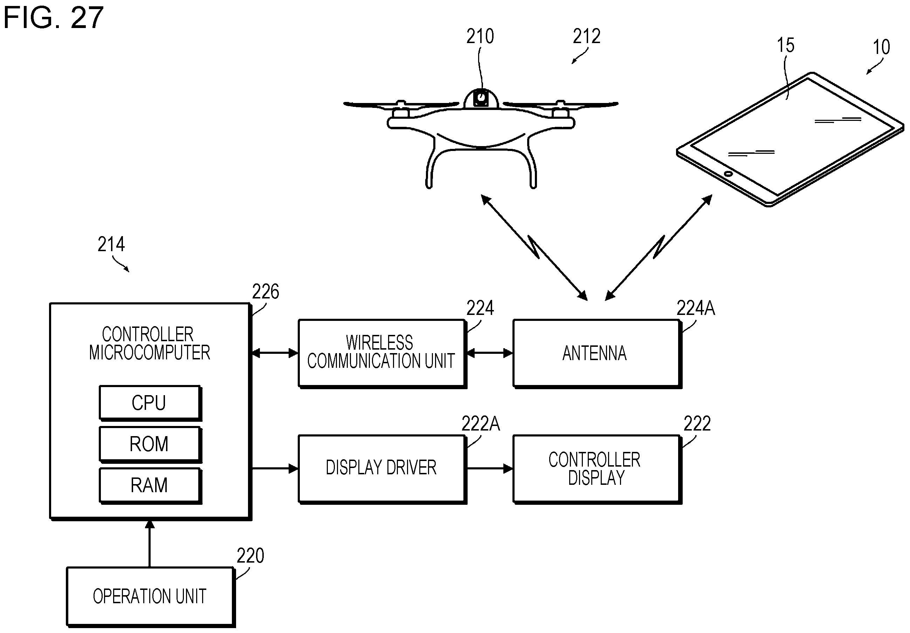

Fig. 27 is a block diagram illustrating an electric configuration of the controller.

The controller 214 includes an operation unit 220, a controller display 222, a wireless communication unit 224, and a controller microcomputer 226.

The operation unit 220 includes various operating members for operating the unattended aircraft 212 and the digital camera 210 and a signal processing circuit for the operating members and outputs a signal based on an operation of each operating member to the controller microcomputer 226. The operating members for operating the unattended aircraft 212 include, for example, an operating member for instructing the unattended aircraft 212 to climb or descend and an operating member for instructing the unattended aircraft 212 to circle. The operating members for operating the digital camera 210 include operating members of a typical camera (a release button, a zoom button, and so on) and a pan and tilt operating member.

The controller display 222 is formed of, for example, an LCD. The controller display 222 is an example of a second display unit. Display on the controller display 222 is controlled by the controller microcomputer 226. The controller microcomputer 226 controls display on the controller display 222 via a display driver 222A.

The wireless communication unit 224 uses an antenna 224A to wirelessly communicate with the unattended aircraft 212 and the photographed-portion setting apparatus 10.

The controller microcomputer 226 is formed of a microcomputer that includes a CPU, a ROM, and a RAM. The controller microcomputer 226 generates a control signal corresponding to an operation of the operation unit 220 and transmits the control signal to the unattended aircraft 212 via the wireless communication unit 224. The controller microcomputer 226 acquires an image captured by the digital camera 210, information about the flight state of the unattended aircraft 212, and so on from the unattended aircraft 212 via the wireless communication unit 224 and displays the received image and information on the controller display 222. Further, the controller microcomputer 226 acquires location information of a photographed portion and a reference image from the photographed-portion setting apparatus 10 to provide a guide for photographing the photographed portion.

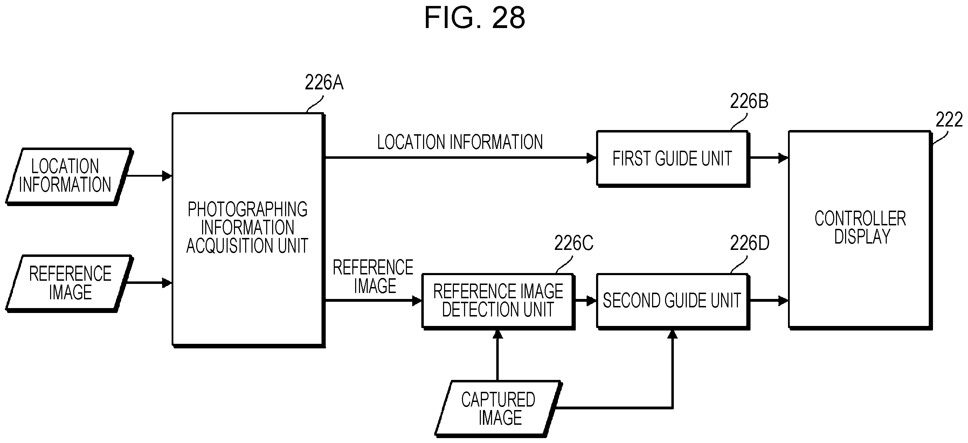

Fig. 28 is a block diagram of a configuration for implementing a guide function.

As illustrated in Fig. 28, the guide function is mainly implemented as a photographing information acquisition unit 226A that acquires location information of a photographed portion and a reference image, a first guide unit 226B that provides a guide for photographing the photographed portion on the basis of the location information of the photographed portion, a reference image detection unit 226C that detects in real time, the reference image from an image captured by the digital camera 210, and a second guide unit 226D that provides a guide for photographing the photographed portion on the basis of the result of detection by the reference image detection unit 226C. The units are implemented by the controller microcomputer 226 executing a specific program.

The photographing information acquisition unit 226A acquires location information and a reference image from the photographed-portion setting apparatus 10. The photographing information acquisition unit 226A communicates with the photographed-portion setting apparatus 10 via the wireless communication unit 224 and acquires location information and a reference image from the photographed-portion setting apparatus 10. The acquired location information is fed to the first guide unit 226B, and the acquired reference image is fed to the reference image detection unit 226C.

The first guide unit 226B provides a guide for photographing a photographed portion on the basis of the location information. As in the above-described first embodiment, it is assumed that location information is formed of a marking image (an image obtained by marking the photographed portion on an image of the photographed subject). The first guide unit 226B displays the marking image on the controller display 222 to provide a guide for photographing the photographed portion. The photographing person views the marking image displayed on the controller display 222 to grasp the approximate position of the photographed portion.

The reference image detection unit 226C detects in real time, a region that matches the reference image from an image captured by the digital camera 210.

The second guide unit 226D provides a guide for photographing the photographed portion on the basis of the result of detection by the reference image detection unit 226C. In this embodiment, the image captured by the digital camera 210 is displayed on the controller display 222 in real time as a live preview image and in a case where the reference image is detected, information indicating the region of the reference image is superimposed on the live preview image and displayed to thereby provide a guide for photographing the photographed portion. More specifically, a frame (detection frame) that indicates the region of the reference image is superimposed on the live preview image and displayed to thereby provide a guide for photographing the photographed portion.

### Operations

Processes performed by the photographed-portion setting apparatus 10 are the same as those performed in the photographing system of the above-described first embodiment. Therefore, a photographing method using the unattended aircraft 212 is described below.

First, location information and a reference image are acquired. The controller 214 wirelessly communicates with the photographed-portion setting apparatus 10 via the wireless communication unit 224 and acquires location information and a reference image from the photographed-portion setting apparatus 10.

After the location information and the reference image have been acquired, first, the location information is displayed on the controller display 222. As described above, the location information is a marking image obtained by marking the photographed portion on an image of the photographed subject, and therefore, the marking image is displayed on the controller display 222. The user (photographing person) views the marking image displayed on the controller display 222 to grasp where the specified photographed portion is.

The user (photographing person) operates the controller 214 on the basis of the grasped information to move the unattended aircraft 212 to a position from which the specified photographed portion can be photographed. During flight, the unattended aircraft 212 transmits an image captured by the digital camera 210 to the controller 214 in real time. The controller 214 displays the image transmitted from the unattended aircraft 212 on the controller display 222 in real time. That is, the image is displayed as a live preview image.

The controller 214 detects in real time, the reference image from the image transmitted from the unattended aircraft 212. In a case where the reference image is detected, a frame (detection frame) that indicates the region of the reference image is superimposed on the live preview image and displayed. At this time, in a case where the reference image fits in the angle of view, a blue frame is displayed. On the other hand, in a case where the reference image does not fit in the angle of view, that is, in a case where only part of the reference image is detected, a red frame (detection frame) is displayed. The user (photographing person) views this display on the controller display 222 and can confirm the position of the specified photographed portion. In a case where the frame does not fit in the angle of view, the user (photographing person) adjusts the position and/or the photographing direction on the basis of the display on the controller display 222. When the frame fits in the angle of view, the user (photographing person) takes in an image for recording and terminates photographing.

Accordingly, also in the photographing system of this embodiment, a guide is appropriately provided for photographing, and a specified photographed portion can be easily photographed.

### Third Embodiment

### Configuration

The photographing system of this embodiment is configured as a system that automatically photographs a specified photographed portion using an unattended aircraft. The photographing system of this embodiment is the same as the photographing system of the above-described second embodiment except for automatic photographing. Accordingly, only a configuration for implementing automatic photographing is described below.

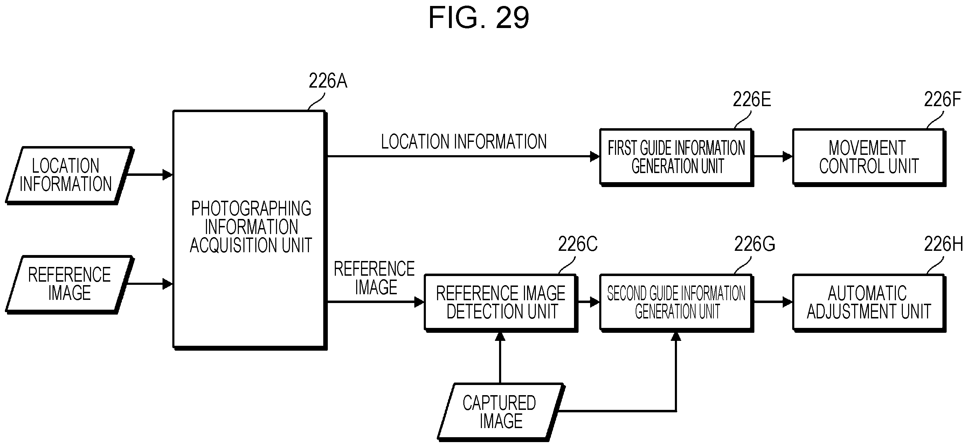

Fig. 29 is a block diagram of a configuration for implementing automatic photographing.

An automatic photographing function is implemented by the controller 214. That is, when the controller microcomputer 226 of the controller 214 executes a specific program, the controller 214 functions as an automatic photographing control device.

As illustrated in Fig. 29, the controller 214 has functions of the photographing information acquisition unit 226A that acquires location information of a photographed portion and a reference image, a first guide information generation unit 226E that generates information for guiding the unattended aircraft 212 to move (fly) to a position from which the photographed portion can be photographed, on the basis of the information indicating the location of the photographed portion, a movement control unit 226F that controls movement (flight) of the unattended aircraft 212 in accordance with the guide information generated by the first guide information generation unit 226E, the reference image detection unit 226C that detects in real time, the reference image from an image captured by the digital camera 210, a second guide information generation unit 226G that generates information for guiding the unattended aircraft 212 to a position from which the photographed portion is photographed, on the basis of the result of detection by the reference image detection unit 226C, and an automatic adjustment unit 226H that automatically adjusts the position of the unattended aircraft 212 in accordance with the guide information generated by the second guide information generation unit 226G.

The photographing information acquisition unit 226A acquires location information and a reference image from the photographed-portion setting apparatus 10. The photographing information acquisition unit 226A communicates with the photographed-portion setting apparatus 10 via the wireless communication unit 224 and acquires location information and a reference image from the photographed-portion setting apparatus 10. In this embodiment, the photographing information acquisition unit 226A acquires GPS information as location information of a photographed portion. The acquired location information is fed to the first guide information generation unit 226E, and the acquired reference image is fed to the reference image detection unit 226C.

The first guide information generation unit 226E generates information for guiding the unattended aircraft 212 to a position from which the photographed portion can be photographed, on the basis of the location information. Specifically, the first guide information generation unit 226E generates a flight route up to a position from which the photographed portion can be photographed as guide information. The first guide information generation unit 226E is an example of a first guide unit.

The movement control unit 226F controls movement (flight) of the unattended aircraft 212 in accordance with the guide information generated by the first guide information generation unit 226E. Specifically, the movement control unit 226F generates a signal for controlling flight of the unattended aircraft 212 in accordance with the guide information (information about the flight route) generated by the first guide information generation unit 226E to move the unattended aircraft 212 to a position from which the photographed portion can be photographed.

The reference image detection unit 226C detects in real time, a region that matches the reference image from an image captured by the digital camera 210.

The second guide information generation unit 226G generates information for guiding the unattended aircraft 212 to a position from which the photographed portion is photographed, on the basis of the result of detection by the reference image detection unit 226C. Specifically, the second guide information generation unit 226G calculates the movement direction and the amount of movement of the unattended aircraft 212 necessary for the reference image to fit in the angle of view on the basis of the result of detection of the reference image and positional information of the current position of the unattended aircraft 212 and generates guide information. The second guide information generation unit 226G is an example of a second guide unit.

The automatic adjustment unit 226H automatically adjusts the position of the unattended aircraft 212 in accordance with the guide information generated by the second guide information generation unit 226G. Specifically, the automatic adjustment unit 226H generates a signal for controlling flight of the unattended aircraft 212 in accordance with the guide information generated by the second guide information generation unit 226G and moves the unattended aircraft 212 to a position at which the photographed portion fits in the angle of view.

### Operations

Processes performed by the photographed-portion setting apparatus 10 are substantially the same as those in the photographing system of the above-described first embodiment. Therefore, a photographing method using the unattended aircraft 212 is described below.

First, location information and a reference image are acquired. The controller 214 wirelessly communicates with the photographed-portion setting apparatus 10 via the wireless communication unit 224 and acquires location information and a reference image from the photographed-portion setting apparatus 10. Note that as described above, in the photographing system of this embodiment, GPS information is acquired as location information. Therefore, the photographed-portion setting apparatus 10 generates GPS information as location information and transmits the GPS information to the digital camera 210.

After the location information and the reference image have been acquired, first, a flight route up to a position from which the photographed portion can be photographed is set. The flight route is set on the basis of the location information.

After the flight route has been set, the unattended aircraft 212 flies in accordance with the set flight route and moves to the position from which the photographed portion can be photographed. During flight, the unattended aircraft 212 transmits an image captured by the digital camera 210 to the controller 214 in real time. The controller 214 displays the image transmitted from the unattended aircraft 212 on the controller display 222 in real time. That is, the image is displayed as a live preview image.

The controller 214 detects in real time, the reference image from the image transmitted from the unattended aircraft 212. In a case where the reference image is detected, a frame (detection frame) that indicates the region of the reference image is superimposed on the live preview image and displayed. Simultaneously, the controller 214 automatically adjusts the position of the unattended aircraft 212 and/or the photographing direction on the basis of the result of detection of the reference image such that the reference image fits in the angle of view. For example, the controller 214 automatically adjusts the position of the unattended aircraft 212 and/or the photographing direction such that the center of the reference image is positioned at the center of the angle of view and the outer edge of the reference image fits in the angle of view. When the reference image fits in the angle of view, the controller 214 starts actual photographing. After actual photographing, the unattended aircraft 212 returns to the flight start point.

Accordingly, with the photographing system of this embodiment, when only a photographed portion is specified, the specified photographed portion can be automatically photographed.

**In** this embodiment, a configuration is employed in which movement to a position from which photographing can be performed and adjustments of the photographing position and the photographing direction after movement are all performed automatically; however, a configuration can be employed in which only one of the movement or the adjustments is automatically performed. For example, a configuration can be employed in which movement to a position from which photographing can be performed is automatically performed and adjustments of the photographing position and the photographing direction after movement are manually performed. Alternatively, a configuration can be employed in which movement to a position from which photographing can be performed is manually performed and adjustments of the photographing position and the photographing direction after movement are automatically performed.

In the above-described embodiment, to check an image that is being captured, a live preview image is displayed on the controller display 222; however, a live preview image need not be displayed. Therefore, in the photographing system of this embodiment, the controller 214 need not include a display.

### Other Embodiments

### Image of Photographed Subject

In the above-described embodiments, a configuration is employed in which the photographed-portion setting apparatus acquires an image obtained by performing panoramic composition as an image of a photographed subject; however, an image of a photographed subject is not limited to this. As an image of a photographed subject, an image thereof captured as a single image may be acquired.

### Photographed-Portion Setting Apparatus

In the above-described embodiments, the photographed-portion setting apparatus is formed of a tablet computer; however, the configuration of the photographed-portion setting apparatus is not limited to this. The photographed-portion setting apparatus may be formed of, for example, a smartphone or a personal computer.

Further, in the above-described embodiments, a configuration is employed in which an image of a photographed subject is acquired from an external device. In a case where an image of a photographed subject is an image obtained by performing panoramic composition, the photographed-portion setting apparatus may include a panoramic composition function. In this case, the photographed-portion setting apparatus acquires a group of images to be subjected to panoramic composition from an external device and internally performs panoramic composition for the acquired group of images. That is, a panoramic composition unit included in the photographed-portion setting apparatus performs a composition process to internally generate an image (panoramic composite image) of the photographed subject.

### Unattended Vehicle

In the above-described embodiments, an example case where an unattended aircraft is used as an unattended vehicle to perform photographing has been described; however, an unattended vehicle that can be used in the present invention is not limited to this. The present invention is also applicable to a case where photographing is performed by using, for example, an unattended land vehicle that travels on land without human attendance, an unattended boat that sails on the water without human attendance, an unattended submarine that travels under the water without human attendance, or an unattended spacecraft that flies in space without human attendance. Further, an unattended vehicle of the present invention includes the concept of a robot.

### Modification of Hardware Configuration of Photographed-Portion Setting Apparatus

Hardware for implementing the photographed-portion setting apparatus can be formed of various processors. The various processors include a CPU (central processing unit), which is a general-purpose processor executing a program to function as various processing units, a programmable logic device (PLD), such as an FPGA (field-programmable gate array), which is a processor having a circuit configuration that is changeable after manufacture, and a dedicated electric circuit, such as an ASIC (application-specific integrated circuit), which is a processor having a circuit configuration specifically designed to perform specific processing. One processing unit that constitutes the photographed-portion setting apparatus may be configured as one of the various processors described above or two or more processors of the same type or different types. For example, one processing unit may be configured as a plurality of FPGAs or a combination of a CPU and an FPGA. Further, a plurality of processing units may be configured as one processor. As the first example of configuring a plurality of processing units as one processor, a form is possible where one processor is formed of a combination of one or more CPUs and software, and the processor functions as the plurality of processing units, a representative example of which is a computer, such as a client or a server. As the second example thereof, a form is possible where a processor is used in which the functions of the entire system including the plurality of processing units are implemented as one IC (integrated circuit) chip, a representative example of which is a system on chip (SoC). As described above, regarding the hardware configuration, the various processing units are configured by using one or more of the various processors described above. Further, the hardware configuration of the various processors is more specifically an electric circuit (circuitry) in which circuit elements, such as semiconductor elements, are combined.

Hardware for implementing the functions of the camera microcomputer in the photographing apparatus can be similarly formed of various processors.

### Reference Signs List

- 1: bridge
- 2: main girder
- 3: cross girder
- 4: sway bracing
- 5: lateral bracing
- 6: floor slab
- 7: panel
- 10: photographed-portion setting apparatus
- 11: CPU
- 15: display
- 16: touch panel
- 17: GPS receiving unit
- 18: camera unit
- 19: microphone unit
- 20: speaker unit
- 21: communication unit
- 21A: antenna
- 22: short-range wireless communication unit
- 22A: antenna
- 23: sensor unit
- 24: media drive
- 25: memory card
- 30A: photographed-subject image acquisition unit
- 30B: display control unit
- 30C: photographed-portion setting unit
- 30D: location information generation unit
- 30E: reference image generation unit
- 30F: photographing information transmission processing unit
- 30G: re-photographed portion detection unit
- 100: digital camera
- 110: imaging lens
- 110A: lens driving unit
- 112: image sensor
- 112A: sensor driving unit
- 114: analog signal processing unit
- 116: digital signal processing unit
- 118: media drive
- 120: memory card
- 122: back-side monitor
- 122A: monitor driver
- 124: short-range wireless communication unit
- 124A: antenna
- 126: communication unit
- 126A: antenna
- 128: flash
- 128A: flash light emission control unit
- 130: microphone
- 132: speaker
- 134: audio signal processing unit
- 136: camera operation unit
- 140: camera microcomputer
- 140A: photographing information acquisition unit
- 140B: first guide unit
- 140C: reference image detection unit
- 140D: second guide unit
- 200: photographing apparatus
- 210: digital camera
- 212: unattended aircraft
- 214: controller
- 216: airframe
- 218: propeller
- 220: operation unit
- 222: controller display
- 222A: display driver
- 224: wireless communication unit
- 224A: antenna
- 226: controller microcomputer
- 226A: photographing information acquisition unit
- 226B: first guide unit
- 226C: reference image detection unit
- 226D: second guide unit
- 226E: first guide information generation unit
- 226F: movement control unit
- 226G: second guide information generation unit
- 226H: automatic adjustment unit
- C: arrow pointing set photographed portion
- FB: detection frame
- FR: detection frame
- IM: marking image
- P: portion omitted from photographing
- PI: panoramic composite image
- RF: reference image
- W: frame indicating specified region
- S1 to S6 ,: procedure of process performed by photographed-portion setting apparatus
- S11 to S23: procedure of process performed by digital camera

## Claims

1. A photographing system comprising:
a photographed-portion setting apparatus (10); and
a photographing apparatus (100),
wherein the photographed-portion setting apparatus (10) comprising:
a first display unit (15);
a photographed-subject image acquisition unit (30A) configured to acquire an image of a photographed subject, said image being a panoramic composition image of entire photographed subject;
a display control unit (30B) configured to display the image of the photographed subject on the first display unit (15);
a photographed-portion setting unit (30C) configured to set a portion to be photographed in the image of the photographed subject by accepting a specification of the portion to be photographed on a screen of the first display unit (15) on which the image of the photographed subject is displayed;
a location information generation unit (30D) configured to generate location information indicating a location of the set portion to be photographed; and
a reference image generation unit (30E) configured to generate a reference image (RF) by cutting an image including a surrounding area of the set portion to be photographed from the image of the photographed subject
wherein the photographing apparatus (100) comprising:
a photographing unit;
a photographing information acquisition unit (140A) configured to acquire the location information generated by the location information generation unit (30D) and the reference image (RF) generated by the reference image generation unit (30E);
a second display unit (122);
a first guide unit (140B) configured to provide a guide for photographing the photographed portion by displaying the location information indicating the location of the set portion to be photographed on the second display unit (122);
a reference image detection unit (140C) configured to detect in real time, the reference image (RF) from an image captured by the photographing unit; and
a second guide unit (140D) that provides a guide for photographing the set portion to be photographed on the basis of a result of detection by the reference image detection unit (140C),
wherein the second guide unit (140D) is configured to display the image captured by the photographing unit on the second display unit (122) in real time as a live preview image, and in a case where the reference image (RF) is detected, the second guide unit (140D) is configured to superimpose and display, on the live preview image, information indicating a region of the reference image (RF).

2. The photographing system according to claim 1, wherein
in a case where the reference image (RF) is detected, the second guide unit (140D) is configured to superimpose on the live preview image and display a frame indicating the region of the reference image (RF),
for example, the second guide unit (140D) displays the frame in different display forms in a case where part of the reference image (RF) is detected and in a case where the entire reference image (RF) is detected, and
preferably, the second guide unit (RF) displays the frame in different colors in a case where part of the reference image (RF) is detected and in a case where the entire reference image (RF) is detected.

3. The photographing system according to claim 1 or 2, wherein
the first guide unit (140B) is configured to display the information indicating the location of the set portion to be photographed on the second display unit (122).

4. The photographing system according to any one of claims 1 to 3, wherein
the photographing apparatus further comprises
an unattended vehicle (212) that is equipped with the photographing unit, and
a remote operation unit (214) that remotely operates the unattended vehicle and the photographing unit.

5. The photographing system according to claim 4, wherein
the first guide unit (140B) is configured to generate guide information for guiding the unattended vehicle (212) to move to a position from which the set portion to be photographed is photographable, on the basis of the information indicating the location of the set portion to be photographed, and
the photographing apparatus further comprises a movement control unit (226F) configured to control movement of the unattended vehicle (212) in accordance with the guide information generated by the first guide unit (140B)
and/or,
the second guide unit (140D) is configured to generate guide information for guiding the unattended vehicle (212) to a position from which the set portion to be photographed is photographed, on the basis of the result of detection by the reference image detection unit (226C), and
the photographing apparatus further comprises an automatic adjustment unit (226H) configured to automatically adjust a position of the unattended vehicle (212) in accordance with the guide information generated by the second guide unit (140D)
and/or,
the unattended vehicle (212) comprises a photographing direction change unit that changes a photographing direction of the photographing unit,
the second guide unit (140D) generates guide information for providing a guide to a position of the unattended vehicle (212) and/or the photographing direction of the photographing unit, on the basis of the result of detection by the reference image detection unit (226C), and
the photographing apparatus further comprises an automatic adjustment unit (226H) configured to automatically adjust the position of the unattended vehicle (212) and/or the photographing direction of the photographing unit in accordance with the guide information generated by the second guide unit (140D).

6. The photographing system according to claim 1, wherein
the reference image generation unit (30E) is configured to generate the reference image (RF) by cutting an image of a certain area centered on the set portion to be photographed from the image of the photographed subject.

7. The photographing system according to claim 1 or 6, wherein
the location information generation unit (30D) is configured to generate an image by marking the set portion to be photographed on the image of the photographed subject, as the information indicating the location of the set portion to be photographed.

8. The photographing system according to any one of claims 1, 6 and 7, further comprising
a photographed-portion specifying unit (16) configured to specify the set portion to be photographed on a screen of the first display unit (15) on which the image of the photographed subject is displayed,
wherein the photographed-portion setting unit (30C) is configured to set a portion specified by the photographed-portion specifying unit (16) as the set portion to be photographed.

9. The photographing system according to claim 8, wherein
the photographed-portion specifying unit (16) is configured to specify the set portion to be photographed by specifying a center of the portion that is set as the set portion to be photographed
or,
the photographed-portion specifying unit (16) is configured to specify the set portion to be photographed by specifying a region including the portion that is set as the set portion to be photographed.

10. The photographing system according to any one of claims 1, 6 and 7, further comprising
a re-photographed portion detection unit (30G) configured to detect a portion that is to be re-photographed from the image of the photographed subject,
wherein the photographed-portion setting unit (30C) sets the portion detected by the re-photographed portion detection unit (30G) as the set portion to be photographed.

11. A photographing method, comprising:
a step of acquiring an image of a photographed subject, said image being a panoramic composition image of entire photographed subject;
a step of displaying the image of the photographed subject on a first display unit;
a step of setting a portion to be photographed in the image of the photographed subject by accepting a specification of the portion to be photographed on a screen of the first display unit (15) on which the image of the photographed subject is displayed;
a step of generating location information indicating a location of the set portion to be photographed;
a step of generating a reference image (RF) by cutting the image including the surrounding area of the set portion to be photographed from the image of the photographed subject;
a step of acquiring the location information and the reference image (RF) ;
a step of providing a guide for photographing the set portion to be photographed by displaying the location information indicating the location of the set portion to be photographed on a second display unit (122);
a step of detecting in real time, the reference image (RF) from a captured image; and
a step of providing a guide for photographing the set portion to be photographed on the basis of a result of detection of the reference image (RF);
a step of displaying the captured image on the second display unit (122) in real time as a live preview image, and in a case where the reference image (RF) is detected, superimposing and displaying, on the live preview image, information indicating a region of the reference image (RF).

## Patentansprüche

1. Fotografiersystem umfassend:
eine Vorrichtung (10) zum Festlegen des fotografierten Abschnitts; und
eine Fotografiervorrichtung (100),
wobei die Vorrichtung (10) zum Festlegen des fotografierten Abschnitts umfasst:
eine erste Anzeigeeinheit (15);
eine Bilderfassungseinheit (30A) für ein fotografiertes Objekt, konfiguriert, ein Bild eines fotografierten Objekts zu erfassen, wobei das Bild ein Panoramakompositionsbild des gesamten fotografierten Objekts ist;
eine Anzeigesteuereinheit (30B), konfiguriert, das Bild des fotografierten Objekts auf der ersten Anzeigeeinheit (15) anzuzeigen;
eine Einheit (30C) zum Festlegen des fotografierten Abschnitts, konfiguriert, einen in dem Bild des fotografierten Gegenstands zu fotografierenden Abschnitt einzustellen, indem sie eine Spezifikation des zu fotografierenden Abschnitts auf einem Bildschirm der ersten Anzeigeeinheit (15), auf dem das Bild des fotografierten Gegenstands angezeigt wird, annimmt;
eine Ortsinformationserzeugungseinheit (30D), konfiguriert, Ortsinformationen zu erzeugen, die einen Ort des festgelegten, zu fotografierenden Abschnitts angeben; und
eine Referenzbilderzeugungseinheit (30E), konfiguriert, ein Referenzbild (RF) durch Ausschneiden eines Bildes, das einen Umgebungsbereich des zu fotografierenden, festgelegten Abschnitts enthält, aus dem Bild des fotografierten Gegenstands zu erzeugen,
wobei die Fotografiervorrichtung (100) umfasst:
eine Fotografiereinheit;
eine Fotografierinformationserfassungseinheit (140A), konfiguriert, die von der Ortsinformationserzeugungseinheit (30D) erzeugten Ortsinformationen und das von der Referenzbilderzeugungseinheit (30E) erzeugte Referenzbild (RF) zu erfassen;
eine zweite Anzeigeeinheit (122);
eine erste Anleitungseinheit (140B), konfiguriert, eine Anleitung für das Fotografieren des fotografierten Abschnitts bereitzustellen, indem sie die Ortsinformationen, die den Ort des festgelegten Abschnitts, der fotografiert werden soll, anzeigen, auf der zweiten Anzeigeeinheit (122) anzeigt;
eine Referenzbilderfassungseinheit (140C), konfiguriert, in Echtzeit das Referenzbild (RF) aus einem von der Fotografiereinheit aufgenommenen Bild zu erfassen; und
eine zweite Anleitungseinheit (140D), die eine Anleitung für das Fotografieren des zu fotografierenden, festgelegten Abschnitts auf der Grundlage eines Ergebnisses der Erfassung durch die Referenzbilderfassungseinheit (140C) bereitstellt,
wobei die zweite Anleitungseinheit (140D) konfiguriert ist, das von der Fotografiereinheit aufgenommene Bild auf der zweiten Anzeigeeinheit (122) in Echtzeit als ein Live-Vorschaubild anzuzeigen, und in einem Fall, in dem das Referenzbild (RF) erfasst wird, die zweite Anleitungseinheit (140D) konfiguriert ist, dem Live-Vorschaubild Informationen zu überlagern und anzuzeigen, die einen Bereich des Referenzbildes (RF) anzeigen.

2. Fotografiersystem gemäß Anspruch 1, wobei
in einem Fall, in dem das Referenzbild (RF) erkannt wird, die zweite Anleitungseinheit (140D) konfiguriert ist, dem Live-Vorschaubild einen Rahmen zu überlagern und anzuzeigen, der den Bereich des Referenzbildes (RF) anzeigt,
die zweite Anleitungseinheit (140D) beispielsweise den Rahmen in unterschiedlichen Darstellungsformen anzeigt, in einem Fall, in dem ein Teil des Referenzbildes (RF) erkannt wird und in einem Fall, in dem das gesamte Referenzbild (RF) erkannt wird, und
vorzugsweise die zweite Anleitungseinheit (140D) den Rahmen in verschiedenen Farben anzeigt, in einem Fall, in dem ein Teil des Referenzbildes (RF) erkannt wird und in einem Fall, in dem das gesamte Referenzbild (RF) erkannt wird.

3. Fotografiersystem gemäß Anspruch 1 oder 2, wobei die erste Anleitungseinheit (140B) konfiguriert ist, die Informationen, die den Ort des zu fotografierenden, festgelegten Abschnitts angeben, auf der zweiten Anzeigeeinheit (122) anzuzeigen.

4. Fotografiersystem gemäß einem der Ansprüche 1 bis 3, wobei die Fotografiervorrichtung ferner umfasst
ein unbeaufsichtigtes Fahrzeug (212), das mit der Fotografiereinheit ausgestattet ist, und
eine Fernbedienungseinheit (214), die das unbeaufsichtigte Fahrzeug und die Fotoeinheit aus der Ferne bedient.

5. Fotografiersystem gemäß Anspruch 4, wobei
die erste Anleitungseinheit (140B) konfiguriert ist, Anleitungsinformationen zu erzeugen, um das unbeaufsichtigte Fahrzeug (212) so zu führen, dass es sich in eine Position bewegt, von der aus der zu fotografierende, festgelegte Abschnitt fotografiert werden kann, auf der Grundlage von Informationen, die den Ort des zu fotografierenden, festgelegten Abschnitts angeben, und
die Fotografiervorrichtung ferner eine Bewegungssteuereinheit (226F), konfiguriert, Bewegungen des unbeaufsichtigten Fahrzeugs (212) gemäß der von der ersten Anleitungseinheit (140B) erzeugten Anleitungsinformation zu steuern, umfasst,
und/oder,
die zweite Anleitungseinheit (140D) konfiguriert ist, Anleitungsinformationen zum Führen des unbeaufsichtigten Fahrzeugs (212) zu einer Position, von der aus der zu fotografierende, festgelegte Abschnitt fotografiert wird, auf der Grundlage des Ergebnisses der Erfassung durch die Referenzbilderfassungseinheit (226C), zu erzeugen, und
die Fotografiervorrichtung ferner eine automatische Einstelleinheit (226H), konfiguriert, automatisch eine Position des unbeaufsichtigten Fahrzeugs (212) gemäß der von der zweiten Anleitungseinheit (140D) erzeugten Anleitungsinformation einzustellen, umfasst,
und/oder,
das unbeaufsichtigte Fahrzeug (212) eine Fotografierrichtungsänderungseinheit umfasst, die eine Fotografierrichtung der Fotografiereinheit ändert,
die zweite Anleitungseinheit (140D) Anleitungsinformationen zur Bereitstellung einer Anleitung zu einer Position des unbeaufsichtigten Fahrzeugs (212) und/oder der Fotografierrichtung der Fotografiereinheit auf der Grundlage des Ergebnisses der Erfassung durch die Referenzbilderfassungseinheit (226C) erzeugt, und
die Fotografiervorrichtung ferner eine automatische Einstelleinheit (226H), konfiguriert, automatisch die Position des unbeaufsichtigten Fahrzeugs (212) und/oder die Fotografierrichtung der Fotografiereinheit gemäß den von der zweiten Anleitungseinheit (140D) erzeugten Anleitungsinformationen einzustellen, umfasst.

6. Fotografiersystem gemäß Anspruch 1, wobei
die Referenzbilderzeugungseinheit (30E) konfiguriert ist, das Referenzbild (RF) zu erzeugen, indem sie ein Bild eines bestimmten Bereichs, der auf den zu fotografierenden, festgelegten Abschnitt zentriert ist, aus dem Bild des fotografierten Objekts ausschneidet.

7. Fotografiersystem gemäß Anspruch 1 oder 6, wobei
die Ortsinformationserzeugungseinheit (30D) konfiguriert ist, ein Bild zu erzeugen, indem sie den zu fotografierenden, festgelegten Abschnitt auf dem Bild des fotografierten Objekts als die Information, die den Ort des zu fotografierenden, festgelegten Abschnitts angibt, markiert.

8. Fotografiersystem gemäß einem der Ansprüche 1, 6 und 7, ferner umfassend:
eine Einheit (16) zum Spezifizieren des fotografierten Abschnitts, konfiguriert, den zu fotografierenden, festgelegten Abschnitt auf einem Bildschirm der ersten Anzeigeeinheit (15), auf dem das Bild des fotografierten Objekts angezeigt wird, zu spezifizieren,
wobei die Einheit (30C) zum Festlegen des fotografierten Abschnitts konfiguriert ist, einen von der Einheit (16) zum Spezifizieren des fotografierten Abschnitts spezifizierten Abschnitt als den zu fotografierenden, festgelegten Abschnitt festlegt.

9. Fotografiersystem gemäß Anspruch 8, wobei
die Einheit (16) zum Spezifizieren des fotografierten Abschnitts konfiguriert ist, den zu fotografierenden, festgelegten Abschnitt zu spezifizieren, indem sie eine Mitte des Abschnitts spezifiziert, der als der zu fotografierende, festgelegte Abschnitt festgelegt ist,
oder,
die Einheit (16) zum Spezifizieren des fotografierten Abschnitts konfiguriert ist, den zu fotografierenden, festgelegten Abschnitt zu spezifizieren, indem sie einen Bereich spezifiziert, der den Abschnitt einschließt, der als zu fotografierender, festgelegter Abschnitt festgelegt ist.

10. Fotografiersystem gemäß einem der Ansprüche 1, 6 und 7, ferner umfassend:
eine Einheit (30G) zum Erkennen eines neu fotografierten Abschnitts, konfiguriert, einen neu zu fotografierenden Abschnitt aus dem Bild des fotografierten Objekts zu erkennen,
wobei die Einheit (30C) zum Festlegen des fotografierten Abschnitts den Abschnitt, der von der Einheit (30G) zum Erkennen eines neu fotografierten Abschnitts erfasst wird, als den zu fotografierenden, festgelegten Abschnitt, festlegt.

11. Fotografierverfahren, umfassend:
einen Schritt des Erfassens eines Bildes eines fotografierten Objekts, wobei das Bild ein Panoramakompositionsbild des gesamten fotografierten Objekts ist;
einen Schritt des Anzeigens des Bildes des fotografierten Objekts auf einer ersten Anzeigeeinheit;
einen Schritt des Festlegens eines zu fotografierenden Abschnitts in dem Bild des fotografierten Objekts durch Annehmen einer Spezifikation des zu fotografierenden Abschnitts auf einem Bildschirm der ersten Anzeigeeinheit (15), auf der das Bild des fotografierten Objekts angezeigt wird;
einen Schritt des Erzeugens von Ortsinformationen, die einen Ort des zu fotografierenden, festgelegten Abschnitts angeben;
einen Schritt des Erzeugens eines Referenzbildes (RF) durch Ausschneiden des Bildes, das den Umgebungsbereich des zu fotografierenden, festgelegten Abschnitts enthält, aus dem Bild des fotografierten Objekts;
einen Schritt des Erfassens der Ortsinformationen und des Referenzbildes (RF);
einen Schritt des Bereitstellens einer Anleitung zum Fotografieren des zu fotografierenden, festgelegten Abschnitts durch Anzeigen der Ortsinformationen, die den Ort des zu fotografierenden, festgelegten Abschnitts angeben, auf einer zweiten Anzeigeeinheit (122);
einen Schritt des Erkennens des Referenzbildes (RF) aus einem aufgenommenen Bild in Echtzeit; und
einen Schritt des Bereitstellens einer Anleitung zum Fotografieren des zu fotografierenden, festgelegten Abschnitts auf der Grundlage eines Ergebnisses der Erfassung des Referenzbildes (RF);
einen Schritt des Anzeigens des aufgenommenen Bildes auf der zweiten Anzeigeeinheit (122) in Echtzeit als ein Live-Vorschaubild, und in einem Fall, in dem das Referenzbild (RF) erkannt wird, des Überlagerns und Anzeigens von Informationen, die einen Bereich des Referenzbildes (RF) anzeigen, auf dem Live-Vorschaubild.

## Revendications

1. Système de photographie comprenant :
un dispositif de réglage de partie à photographier (10) ; et
un appareil de photographie (100),
dans lequel le dispositif de réglage de partie à photographier (10) comprend :
une première unité d'affichage (15) ;
une unité d'acquisition d'image de sujet photographié (30A) configurée pour acquérir une image d'un sujet photographié, ladite image étant une image de composition panoramique du sujet photographié entier ;
une unité de commande d'affichage (30B) configurée pour afficher l'image du sujet photographié sur la première unité d'affichage (15) ;
une unité de définition de partie photographiée (30C) configurée pour définir une partie à photographier dans l'image du sujet photographié en acceptant une spécification de la partie à photographier sur un écran de la première unité d'affichage (15) sur lequel l'image du sujet photographié est affichée ;
une unité de génération d'informations de localisation (30D) configurée pour générer des informations de localisation indiquant une localisation de la partie définie à photographier ;
et une unité de génération d'image de référence (30E) configurée pour générer une image de référence (RF) en coupant une image incluant une zone environnante de la partie définie à photographier à partir de l'image du sujet photographié,
dans lequel l'appareil de photographie (100) comprend :
une unité de photographie ;
une unité d'acquisition d'informations de photographie (140A) configurée pour acquérir les informations de localisation générées par l'unité de génération d'informations de localisation (30D) et l'image de référence (RF) générée par l'unité de génération d'image de référence (30E) ;
une seconde unité d'affichage (122) ;
une première unité de guidage (140B) configurée pour fournir un guide pour photographier la partie photographiée en affichant les informations de localisation indiquant la localisation de la partie à photographier sur la seconde unité d'affichage (122) ;
une unité de détection d'image de référence (140C) configurée pour détecter en temps réel l'image de référence (RF) à partir d'une image capturée par l'unité de photographie ; et
une seconde unité de guidage (140D) qui fournit un guide pour photographier la partie définie à photographier sur la base d'un résultat de détection par l'unité de détection d'image de référence (140C),
dans lequel la seconde unité de guidage (140D) est configurée pour afficher l'image capturée par l'unité de photographie sur la seconde unité d'affichage (122) en temps réel sous la forme d'une image de prévisualisation en direct, et dans le cas où l'image de référence (RF) est détectée, la seconde unité de guidage (140D) est configurée pour superposer et afficher, sur l'image de prévisualisation en direct, des informations indiquant une région de l'image de référence (RF).

2. Système de photographie selon la revendication 1, dans lequel
dans le cas où l'image de référence (RF) est détectée, la seconde unité de guidage (140D) est configurée pour superposer sur l'image de prévisualisation en direct et afficher un cadre indiquant la région de l'image de référence (RF),
par exemple, la seconde unité de guidage (140D) affiche le cadre sous différentes formes d'affichage dans le cas où une partie de l'image de référence (RF) est détectée et dans le cas où l'image de référence (RF) entière est détectée, et
de préférence, la seconde unité de guidage (RF) affiche le cadre en différentes couleurs dans le cas où une partie de l'image de référence (RF) est détectée et dans le cas où l'image de référence (RF) entière est détectée.

3. Système de photographie selon la revendication 1 ou 2, dans lequel
la première unité de guidage (140B) est configurée pour afficher les informations indiquant la localisation de la partie définie à photographier sur la seconde unité d'affichage (122).

4. Système de photographie selon l'une quelconque des revendications 1 à 3, dans lequel
l'appareil de photographie comprend en outre :
un véhicule sans conducteur (212) qui est équipé de l'unité de photographie et
une unité d'actionnement à distance (214) qui actionne à distance le véhicule sans conducteur et l'unité de photographie.

5. Système de photographie selon la revendication 4, dans lequel
la première unité de guidage (140B) est configurée pour générer des informations de guidage pour guider le véhicule sans conducteur (212) afin qu'il se déplace vers une position à partir de laquelle la partie définie à photographier peut être photographiée, sur la base des informations indiquant la localisation de la partie définie à photographier, et
l'appareil de photographie comprend en outre une unité de commande de déplacement (226F) configurée pour commander le déplacement du véhicule sans conducteur (212) en fonction des informations de guidage générées par la première unité de guidage (140B)
et/ou
la seconde unité de guidage (140D) est configurée pour générer des informations de guidage pour guider le véhicule sans conducteur (212) vers une position à partir de laquelle la partie définie à photographier est photographiée, sur la base du résultat de détection par l'unité de détection d'image de référence (226C), et
l'appareil de photographie comprend en outre une unité de réglage automatique (226H) configurée pour régler automatiquement une position du véhicule sans conducteur (212) en fonction des informations de guidage générées par la seconde unité de guidage (140D)
et/ou
le véhicule sans conducteur (212) comprend une unité de changement de direction de photographie qui change une direction de photographie de l'unité de photographie,
la seconde unité de guidage (140D) génère des informations de guidage pour fournir un guidage vers une position du véhicule sans conducteur (212) et/ou la direction de photographie de l'unité de photographie, sur la base du résultat de détection par l'unité de détection d'image de référence (226C), et
l'appareil de photographie comprend en outre une unité de réglage automatique (226H) configurée pour régler automatiquement la position du véhicule sans conducteur (212) et/ou la direction de photographie de l'unité de photographie en fonction des informations de guidage générées par la seconde unité de guidage (140D).

6. Système de photographie selon la revendication 1, dans lequel
l'unité de génération d'image de référence (30E) est configurée pour générer l'image de référence (RF) en coupant une image d'une certaine zone centrée sur la partie définie à photographier à partir de l'image du sujet photographié.

7. Système de photographie selon la revendication 1 ou 6, dans lequel
l'unité de génération d'informations de localisation (30D) est configurée pour générer une image en marquant la partie définie à photographier sur l'image du sujet photographié en tant qu'informations indiquant la localisation de la partie définie à photographier.

8. Système de photographie selon l'une quelconque des revendications 1, 6 et 7, comprenant en outre
une unité de spécification de partie photographiée (16) configurée pour spécifier la partie définie à photographier sur un écran de la première unité d'affichage (15) sur lequel l'image du sujet photographié est affichée,
dans lequel l'unité de définition de partie photographiée (30C) est configurée pour définir une partie spécifiée par l'unité de spécification de partie photographiée (16) comme étant la partie définie à photographier.

9. Système de photographie selon la revendication 8, dans lequel
l'unité de spécification de partie photographiée (16) est configurée pour spécifier la partie définie à photographier en spécifiant un centre de la partie qui est définie comme étant la partie définie à photographier
ou
l'unité de spécification de partie photographiée (16) est configurée pour spécifier la partie définie à photographier en spécifiant une région incluant la partie qui est définie comme étant la partie définie à photographier.

10. Système de photographie selon l'une quelconque des revendications 1, 6 et 7, comprenant en outre
une unité de détection de partie rephotographiée (30G) configurée pour détecter une partie qui doit être rephotographiée à partir de l'image du sujet photographié,
dans lequel l'unité de définition de partie photographiée (30C) définit la partie détectée par l'unité de détection de partie rephotographiée (30G) comme étant la partie définie à photographier.

11. Procédé de photographie, comprenant :
une étape consistant à acquérir une image d'un sujet photographié, ladite image étant une image de composition panoramique du sujet photographié entier ;
une étape consistant à afficher l'image du sujet photographié sur une première unité d'affichage ;
une étape consistant à définir une partie à photographier dans l'image du sujet photographié en acceptant une spécification de la partie à photographier sur un écran de la première unité d'affichage (15) sur lequel l'image du sujet photographié est affichée ;
une étape consistant à générer des informations de localisation indiquant une localisation de la partie définie à photographier ;
une étape consistant à générer une image de référence (RF) en coupant l'image incluant la zone environnante de la partie définie à photographier à partir de l'image du sujet photographié ;
une étape consistant à acquérir les informations de localisation et l'image de référence (RF) ;
une étape consistant à fournir un guide pour photographier la partie définie à photographier en affichant les informations de localisation indiquant la localisation de la partie définie à photographier sur une seconde unité d'affichage (122) ;
une étape consistant à détecter en temps réel l'image de référence (RF) à partir d'une image capturée ; et
une étape consistant à fournir un guide pour photographier la partie définie à photographier sur la base d'un résultat de détection de l'image de référence (RF) ;
une étape consistant à afficher l'image capturée sur la seconde unité d'affichage (122) en temps réel sous la forme d'une image de prévisualisation en direct, et dans le cas où l'image de référence (RF) est détectée, à superposer et afficher, sur l'image de prévisualisation en direct, des informations indiquant une région de l'image de référence (RF).
